(19) Europäisches Patentamt / European Patent Office / Office européen des brevets

(11) **EP 4 412 226 A1**

(12) **EUROPEAN PATENT APPLICATION**

(43) Date of publication:
   **07.08.2024   Bulletin 2024/32**

(21) Application number: **23206243.0**

(22) Date of filing: **26.10.2023**

(51) International Patent Classification (IPC):
   *H04N 21/435* [(2011.01)]   *H04N 19/467* [(2014.01)]
   *H04N 21/44* [(2011.01)]   *H04N 21/81* [(2011.01)]
   *H04N 21/431* [(2011.01)]   *H04N 21/4363* [(2011.01)]
   *H04N 21/443* [(2011.01)]   *H04N 21/454* [(2011.01)]

(52) Cooperative Patent Classification (CPC):
   **H04N 21/812; H04N 21/4316; H04N 21/4318;**
   **H04N 21/435; H04N 21/43635; H04N 21/44008;**
   **H04N 21/4438; H04N 21/454; H04N 21/8146;**
   H04N 17/004

(84) Designated Contracting States:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Designated Extension States:
   **BA**
   Designated Validation States:
   **KH MA MD TN**

(30) Priority:   **06.02.2023   GB 202301659**
            **06.02.2023   GB 202301661**

(71) Applicant: **Samsung Electronics Co., Ltd.**
   **Suwon-si, Gyeonggi-do 16677 (KR)**

(72) Inventors:
   • **WORRALL, Stewart Thomas**
      **Staines, TW18 4QE (GB)**
   • **SHEPPARD, Andrew James**
      **Staines, TW18 4QE (GB)**
   • **ALDER, Christopher Mark**
      **Staines, TW18 4QE (GB)**

(74) Representative: **Appleyard Lees IP LLP**
   **15 Clare Road**
   **Halifax HX1 2HY (GB)**

(54) **DETECTING MODIFICATIONS IN VIDEO STREAMS**

(57)   A method is disclosed for determining whether a frame of a video stream has been modified relative to an original version of the frame, together with corresponding apparatus and computer-readable storage medium storing computer program instructions for performing the method. The method comprises obtaining a hash of a first frame in a received video stream, obtaining a distance value indicative of a difference between the obtained hash and a reference hash associated with the first frame, and determining that the first frame has been modified relative to the original version of the first frame based on the obtained distance value exceeding a threshold. The reference hash comprises a hash value derived from an original version of the frame.

FIG. 1

EP 4 412 226 A1

## Description

### Technical Field

The present invention relates to detecting modifications in video streams. More particularly, the present invention relates to a method, apparatus and computer-readable storage medium storing computer program instructions for determining whether a frame of a video stream has been modified relative to an original version of the frame.

The present invention relates to transmitting and receiving additional data via video streams. More particularly, the present invention relates to methods, apparatus and computer-readable storage mediums storing computer program instructions for transmitting and receiving additional data via video streams.

### Background

Targeted advertising has become more popular amongst broadcasters and advertisers, as a way of presenting users with advertising content that is more likely to be relevant to them personally in comparison to generic advertising content. Various protocols for delivering targeted advertising are known in the art, such as "Application Discovery over Broadband" phase 2 (ADB2), in which watermarking is used to embed data into a video stream. The embedded data signals to the television (TV) how to retrieve targeted adverts, and when to display them. However, the presence of the embedded data can produce noticeable visual artefacts that may disrupt the user's viewing experience, for example by introducing visible noise in the displayed video image. It would therefore be desirable to provide an improved method of embedding data into a video stream.

Additionally, when targeted advertising is automatically displayed by the TV, there may be a risk of the targeted advertising being overlaid on top of Graphical User Interface (GUI) data that has been inserted into the video stream by another device upstream of the TV, such as a Set-Top Box (STB). Accordingly, it would be desirable to provide a method for the TV to detect when a STB or other device has added GUI data to a frame of the video stream.

The invention is made in this context.

### Summary of the Invention

According to a first aspect of the present invention, there is provided a method for determining whether a frame of a video stream has been modified relative to an original version of the frame, the method comprising: receiving a video stream; obtaining a hash of a first frame in the video stream; obtaining a distance value indicative of a difference between the obtained hash and a reference hash associated with the first frame, based on a comparison between the obtained hash and the reference hash, wherein the reference hash comprises a hash value derived from an original version of the frame; and based on the obtained distance value exceeding a threshold, determining that the first frame has been modified relative to the original version of the first frame.

In some embodiments according to the first aspect, the method comprises obtaining the reference hash from the received video stream.

In some embodiments according to the first aspect, the received video stream comprises embedded additional data in the form of one or more modified pixel values in an overscan area, the one or more modified pixel values relate to a brightness and/or colour property of a respective one of a plurality of pixels in the overscan area, wherein obtaining the reference hash from the received video stream comprises extracting the additional data from the overscan area, and obtaining the reference hash from the extracted additional data.

In some embodiments according to the first aspect, the additional data further comprises a Uniform Resource Locator, URL, in addition to the reference hash.

In some embodiments according to the first aspect, the method comprises retrieving further data from a location identified by the URL, and performing an action in dependence on the retrieved further data.

In some embodiments according to the first aspect, the method is performed at a display apparatus configured to display targeted advertising content during an advertising break within the video stream.

In some embodiments according to the first aspect, the further data comprises the targeted advertising content, and performing the action at the display apparatus comprises reproducing the targeted advertising content during the advertising break within the video stream.

In some embodiments according to the first aspect, the method comprises: in response to a determination that the first frame has been modified relative to an original version of the first frame, suppressing displaying of the targeted advertising content at the display apparatus until a subsequent determination that a subsequent frame of the video stream has not been modified relative to an original version of the subsequent frame.

In some embodiments according to the first aspect, the method comprises: in response to a determination that the first frame has not been modified relative to an original version of the first frame, or in response to a determination that the subsequent frame of the video stream has not been modified relative to an original version of the subsequent frame, permitting the targeted advertising content to be displayed at the display apparatus.

In some embodiments according to the first aspect, the targeted advertising is displayed over at least part of said first frame or said subsequent frame.

In some embodiments according to the first aspect, the video stream comprises interlaced video such that a given frame within the video stream comprises interlaced rows of portions of a first field and portions of a second field such that said frame can be deinterlaced to obtain a first picture and a second picture, the first picture comprising pixels included in said portions of the first field and the second picture comprising pixels included in said portions of the second field, wherein obtaining the hash of the first frame comprises obtaining a hash of the first picture after deinterlacing said portions of the first field and said portions of the second field.

In some embodiments according to the first aspect, the method comprises: obtaining two reference hashes comprising a first reference hash and a second reference hash associated with said frame, such that one of said two reference hashes comprises a hash value derived from the first field and the other one of said two reference hashes comprises a hash value derived from the second field, and the two reference hashes do not indicate which one of the first and second fields was used to derive the respective hash values, wherein obtaining the distance value comprises: comparing the obtained hash of the first picture to one of said two reference hashes to obtain a first distance value; comparing the obtained hash of the first picture to the other one of said two reference hashes to obtain a distance difference value; and selecting the smallest one of the plurality of distance values as the distance value.

In some embodiments according to the first aspect, the method comprises: obtaining a plurality of reference hashes each associated with a respective one of a plurality of hashing regions within said first frame, such that one of said plurality of reference hashes comprises a hash value derived from one of the plurality of hashing regions and another one of said plurality of reference hashes comprises a hash value derived from another one of the plurality of hashing regions, wherein obtaining the hash of the first frame comprises obtaining a plurality of hashes of the image content of the plurality of hashing regions, such that each obtained hash is derived from the image content of a different one of the plurality of hashing regions, wherein obtaining the distance value comprises: obtaining a plurality of distance values, each of said distance values being obtained by comparing a respective one of the plurality of reference hashes to a respective one of the hashes obtained for the plurality of hashing regions; and selecting the largest one of the first and second distance values as the distance value indicative of the difference between the obtained hash and the reference hash associated with the first frame.

In some embodiments according to the first aspect, obtaining the hash of the first frame comprises: applying a frequency domain transformation to the first frame, to obtain a plurality of frequency coefficients; for each one of a subset of said plurality of frequency coefficients, calculating a sum of the frequency coefficients within said subset, so as to obtain a plurality of coefficient sums; clipping each coefficient sum to a respective fixed number of bits; and obtaining the hash by combining the clipped coefficient sums in a predefined manner.

In some embodiments according to the first aspect, obtaining the hash of the first frame further comprises at least one of: downsampling the received frame to a predetermined size, prior to applying the frequency domain transformation; cropping the received frame, prior to applying the frequency domain transformation; and quantizing each of the plurality of frequency coefficients, prior to calculating the sum of the frequency coefficients within said subset.

According to a second aspect of the present invention, there is provided a computer-readable storage medium storing computer program instructions which, when executed, perform a method according to the first aspect.

According to a third aspect of the present invention, there is provided apparatus for determining whether a frame of a video stream has been modified relative to an original version of the frame, the apparatus comprising: one or more processors; and computer-readable memory arranged to store computer program instructions which, when executed by the one or more processors, cause the apparatus to: obtain a hash of a first frame in a received video stream; obtain a distance value indicative of a difference between the obtained hash and a reference hash associated with the first frame, based on a comparison between the obtained hash and the reference hash, wherein the reference hash comprises a hash value derived from an original version of the frame; and based on the obtained distance value exceeding a threshold, determine that the first frame has been modified relative to the original version of the first frame.

According to a fourth aspect of the present invention, there is provided apparatus for determining whether a frame of a video stream has been modified relative to an original version of the frame, the apparatus comprising: a hashing unit configured to obtain a hash of a first frame in a received video stream; a distance calculating unit configure to obtain a distance value indicative of a difference between the obtained hash and a reference hash associated with the first frame, based on a comparison between the obtained hash and the reference hash, wherein the reference hash comprises a hash value derived from an original version of the frame; and a modification determining unit configured to determine that the first frame has been modified relative to the original version of the first frame based on the obtained distance value exceeding a threshold.

**Brief Description of the Drawings**

Embodiments of the present invention will now be described, by way of example only, with reference to the accompanying drawings, in which:

Figure 1 illustrates a video broadcasting system according to an embodiment of the present invention;

Figure 2 illustrates apparatus for embedding additional data into a video stream, according to an embodiment of the present invention;

Figure 3 is a flowchart showing a method of embedding additional data into a video stream, according to an embodiment of the present invention;

Figure 4 illustrates a video frame comprising overscan regions into which additional data is embedded, according to an embodiment of the present invention;

Figure 5 illustrates a first part of an overscan area separated from a content region of the video frame by a second part of an overscan area, according to an embodiment of the present invention;

Figure 6 illustrates an overscan area aligned with boundaries between video coding blocks in a video frame, according to an embodiment of the present invention;

Figure 7 illustrates an overscan area offset with respect to boundaries between video coding blocks in a video frame, according to an embodiment of the present invention;

Figure 8 illustrates content regions adjacent to respective overscan areas into which additional data is embedded, according to an embodiment of the present invention;

Figure 9 illustrates apparatus for extracting embedded additional data from a received video stream, according to an embodiment of the present invention;

Figure 10 is a flowchart showing a method of displaying targeted advertising content based on embedded data extracted from a received video stream, according to an embodiment of the present invention;

Figure 11 illustrates apparatus for identifying adaptive chroma values used to encode embedded additional data in an overscan area of a video stream, according to an embodiment of the present invention;

Figure 12 is a flowchart showing a method of identifying adaptive chroma values used to encode embedded additional data in an overscan area of a video stream, according to an embodiment of the present invention;

Figure 13 illustrates an example of a histogram obtained by counting a number of times that each one of a plurality of chroma values occurs within an overscan area, together with an example of the same histogram after applying a filter centred on the highest peak, according to an embodiment of the present invention;

Figure 14 is a flowchart showing a method of determining whether a frame of a video stream has been modified relative to an original version of the frame, according to an embodiment of the present invention;

Figure 15 illustrates a picture in an interlaced video stream, according to an embodiment of the present invention;

Figure 16 is a flowchart showing a method of determining whether a frame of interlaced video has been modified relative to an original version of the frame, according to an embodiment of the present invention;

Figure 17 is a flowchart showing a method of obtaining a hash from image data of a video frame, according to an embodiment of the present invention;

Figure 18 illustrates apparatus for determining whether a frame of a video stream has been modified relative to an original version of the frame, according to an embodiment of the present invention;

Figure 19 illustrates apparatus for implementing any of the disclosed methods in software, according to an embodiment of the present invention; and

Figure 20 is a flowchart showing a method of determining whether a region within a frame of progressive video has been modified relative to an original version of that region, according to an embodiment of the present invention.

**Detailed Description**

In the following detailed description, only certain exemplary embodiments of the present invention have been shown and described, simply by way of illustration. As those skilled in the art would realise, the described embodiments may be modified in various different ways, all without departing from the scope of the present invention. Accordingly, the drawings and description are to be regarded as illustrative in nature and not restrictive. Like reference numerals designate like elements throughout the specification.

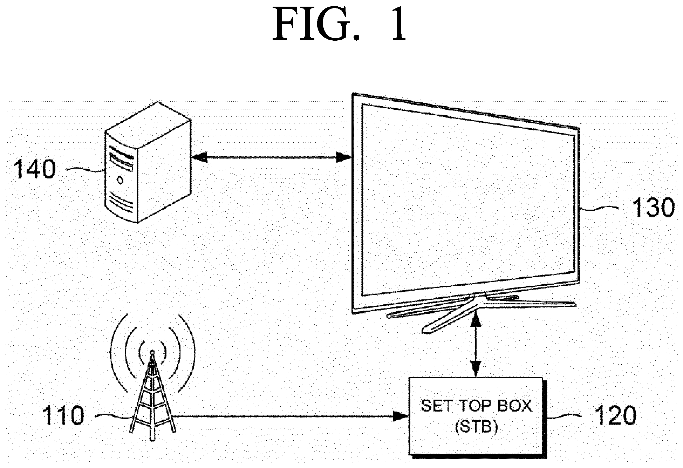

Referring now to Fig. 1, a video broadcasting system is illustrated according to an embodiment of the present invention. The system comprises a broadcasting apparatus 110, a broadcast receiver 120, such as a set-top box (STB), and a display apparatus 130, such as a television (TV). In the present embodiment the system also comprises an advertising content server 140 capable of providing targeted advertising content to the display apparatus 130, although in some embodiments the server 140 may be omitted. Furthermore, although in the present embodiment the broadcast receiver 120 and display apparatus 130 are shown as physically separate devices, such as a STB and TV, in other embodiments the broadcast receiver 120 and display apparatus 130 may be integrated into a single device. For example, a display apparatus 130 such as a digital TV (DTV) may include broadcast receiving hardware capable of directly receiving and processing the signal transmitted by the broadcasting apparatus 110, without the need for a STB or other separate receiver.

It should be appreciated that embodiments of the present invention are not limited to use with apparatus such as the ones illustrated in Fig. 1, and in other embodiments the principles disclosed herein may readily be applied in other systems, for example, systems including other forms of display apparatus 130 such as laptop, tablet or desktop computer monitors, projector screens, mobile phone displays, and so on.

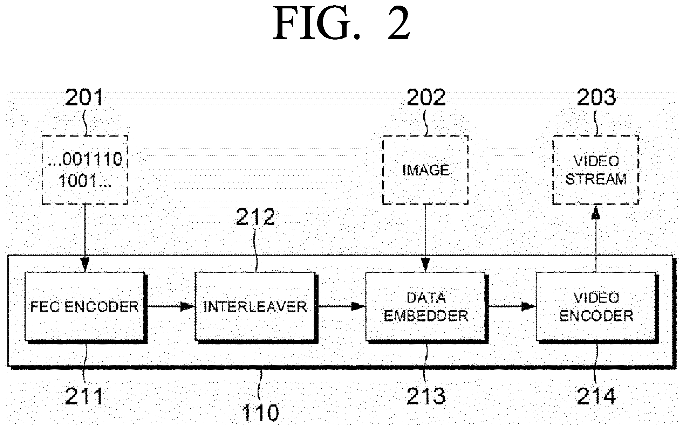

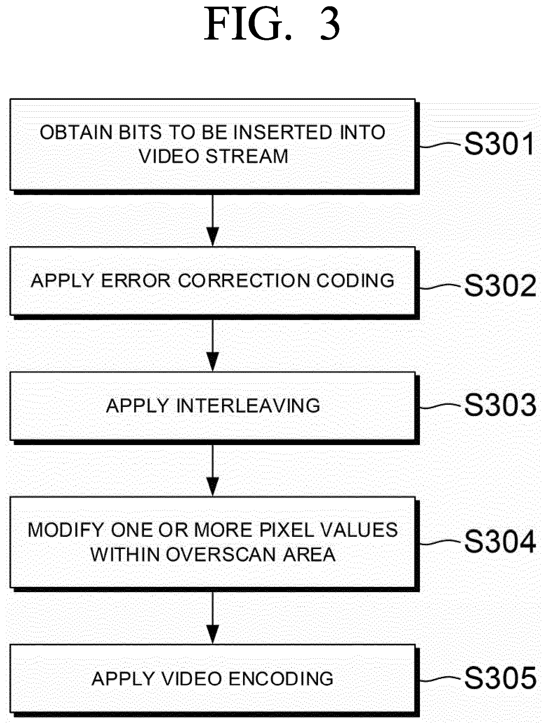

Referring now to Figs. 2 and 3, an apparatus and method for embedding additional data into a video stream will now be described. Figure 2 is a functional block diagram illustrating one possible structure of the broadcasting apparatus 110 in the system of Fig. 1, which can implement a method as shown in the flowchart of Fig. 3. The broadcasting apparatus 110 comprises a forward error correction (FEC) encoder 211, interleaver 212, data embedder 213, and video encoder 214. Depending on the embodiment, each of the FEC encoder 211, interleaver 212, data embedder 213, and video encoder 214 may be implemented as physically separate hardware components within the broadcasting apparatus 110, or the functionality of one or more of the FEC encoder 211, interleaver 212, data embedder 213, and video encoder 214 may be combined in a single hardware component, such as a field-programmable gate array (FPGA) or application-specific integrated circuit (ASIC).

Furthermore, in some embodiments one or more of the FEC encoder 211, interleaver 212, data embedder 213, and video encoder 214 may be implemented as software modules, in the form of computer program instructions executed on one or more processors. In such embodiments, suitable computer program instructions for implementing the functionality of the FEC encoder 211, interleaver 212, data embedder 213, and/or video encoder 214 may be stored in any suitable form of computer-readable storage medium accessible to one or more processors of the broadcasting apparatus 110.

The method shown in Fig. 3 can be used by one apparatus to transmit the additional data to another apparatus through a video stream. For example, in a system such as the one shown in Fig. 1, the method may be employed at the broadcasting apparatus 110 to transmit additional data through a video stream that can subsequently be extracted and processed at another apparatus in the system, for example the TV 130.

In the present embodiment, the method is used to embed additional data in the form of targeted advertising data, for example, information that signals to the TV 130 how to retrieve targeted adverts from the server 140 and when to display them. However, it will be understood that the advantages offered by the method shown in Fig. 3 may exist irrespective of the nature of the additional data that is being embedded into the video stream. As such, in some embodiments of the present invention a method such as the one shown in Fig. 3 may be used to embed other types of additional data, i.e. data other than targeted advertising data. For instance, in some embodiments a method such as the one shown in Fig. 3 may be used to embed data for launching an application at the broadcasting receiver 120, for example application data for so-called "red button" applications.

First, in step S301 the broadcasting apparatus 110 obtains a plurality of bits of additional data 201 to be embedded into a video stream. As explained above, in the present embodiment the plurality of bits 201 comprise targeted advertising data, but in other embodiments the additional data may convey information other than targeted advertising data.

Next, in step S302 the FEC encoder 211 applies error correction coding to the plurality of bits of additional data prior to the plurality of bits of additional data being embedded into the video stream. In the present embodiment, error correction coding is applied in the form of a Repeat Accumulate (RA) code in step S302, with coding rate C. If the message data contains $B_{message}$ bits, then the channel coded data contains a number of bits $B_c$ equal to ($B_{message} \times$ C). In some embodiments error correction coding may not be used, in which case the FEC encoder 211 may be omitted from the broadcasting apparatus 110 and step S302 may be omitted from the method shown in Fig. 3.

Then, in step S303 the interleaver 212 applies interleaving to the plurality of bits of additional data to change an order of the plurality of bits, according to a predefined interleaving scheme, prior to the plurality of bits of additional data being embedded into the video stream. The effect of interleaving the plurality of bits is to shuffle the order of bits before they are embedded into the video stream. When the plurality of bits are embedded in a video stream and video compression is subsequently applied to the video stream, for example using the video encoder 214, different compression levels may be applied to different regions to optimise the perceptual quality. Along with spatial prediction, this can mean that clusters of errors can occur together in the encoded video stream.

By using the interleaver 212 to shuffle bits prior to embedding in the video stream, any clusters of errors that might occur in the interleaved bits following video compression may subsequently be converted to isolated errors once the embedded data is extracted and de-interleaved, which in turn can make error correction easier. For example, in general an RA decoder can cope better with isolated errors rather than clusters of errors. As with error correction coding, in some embodiments interleaving may not be used, in which case the interleaver 212 may be omitted from the broadcasting apparatus 110 and step S303 may be omitted from the method shown in Fig. 3.

Next, in step S304 the data embedder 213 obtains pixel data for a plurality of pixels of the video stream, for example in the form of an input image 202 to be transmitted in the video stream, and embeds the plurality of bits of additional data into the video stream. In particular, the data embedder 213 embeds the bits of additional data by modifying one or more pixel values of a plurality of pixels within an overscan area of the video stream. Here, the one or more pixel values relate to a brightness and/or colour property of a respective one of the plurality of pixels. For example, the one or more pixel values that are modified may comprise one or more luma values and/or one or more chroma values.

Finally, in step S305 the video encoder 214 applies video encoding to compress the video stream including the embedded bits of additional data, and outputs an encoded video stream 203. The type of compression that is applied by the video encoder 214 may vary depending on the broadcasting standard used in any given embodiment, for example, H.264 or MPEG-2 encoding may be used. In some embodiments, the video stream may be transmitted without compression, in which case the video encoder 214 may be omitted from the broadcasting apparatus 110 and step S305 may be omitted from the method shown in Fig. 3.

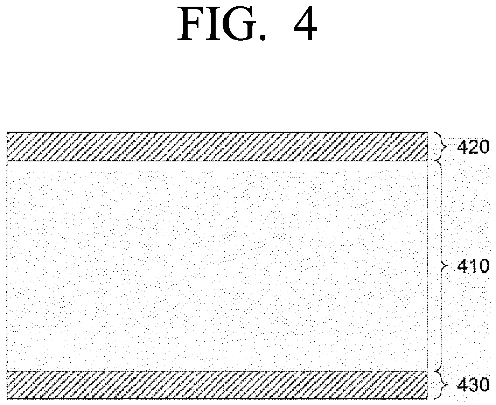

The method by which the bits of additional data are embedded into the video stream in step S304 of Fig. 3 will now be described with reference to Figs. 4 to 8, which illustrate areas within a frame of the video stream 203.

Referring first to Fig. 4, a video frame is illustrated comprising overscan regions into which additional data is embedded, according to an embodiment of the present invention. In the present embodiment, the overscan regions take the form of black bars at the top and bottom edges of the video frame. In the following description, the term "overscan area" is used to denote the entire overscan part of the video frame, whilst the term "overscan region" denotes a specific part of the frame that sits within the total overscan area.

As shown in Fig. 4, the overscan area comprises a first overscan region 420 and a second overscan region 430. The first and second overscan regions 420, 430 are separated by a content area 410, which is an area of the video frame containing image content. In the present embodiment, both the first and second overscan regions 420, 430 extend from a left-hand edge to a right-hand edge of the video frame. The first overscan region 420 comprises a part of the overscan area situated at the top edge of the video frame, whilst the second overscan region 430 comprises a part of the overscan area situated at the bottom edge of the video frame. The overscan area may also include other overscan regions on either side of the content area 410, such that the overscan area effectively surrounds the content area 410 in all directions.

In step S304 of Fig. 3, the bits of additional data are embedded into the video stream by modifying pixel values of one or more pixels within the first and second overscan areas. In the present embodiment, the additional data is embedded by modifying pixel values relating to colour, for example chroma values, of one or more pixels in the first and second overscan regions 420, 430. Pixel values relating to a brightness of the plurality of pixels within the overscan area, for example luma values, are set to a black point of the video. In the present embodiment, all pixels in the overscan area, including the first and second overscan regions 420, 430, are set to have a luma value of 16, which is the black point of video for both standard definition (SD) and high definition (HD) video. However, it should be appreciated that other luma values may be chosen in other embodiments, depending on the video standard that is used.

In the present embodiment, only the pixel values relating to colour (e.g. chroma) are modified when embedding data in the first and second overscan regions 420, 430, for example by encoding the bits of additional data as small variations around a certain chroma value (e.g. 128). In other words, pixel values relating to brightness (e.g. luma) are not modified. This can help to make embedding imperceptible to a user viewing the displayed video frame, since the small differences in chroma values may not be apparent to the user, particularly when the brightness of all pixels in the overscan area is set to the black point of the video. A further benefit of not modifying the pixel values relating to brightness, e.g. luma values, while embedding additional data is that the method can be used in conjunction with other schemes that embed data using luma values, for example, a watermarking scheme according to the A335 standard.

However, in other embodiments a different approach may be used when embedding the bits of additional data. For example, in some embodiments only the pixel values relating to brightness may be modified, whilst the same colour values may be used for all pixels in the overscan area. In other embodiments, pixel values relating to both brightness and colour may be modified when embedding the bits of additional data. In either approach, the variation in brightness and/or colour may not be noticeable to the user provided that the variations are small enough.

By embedding bits of additional data into first and second overscan regions as shown in Fig. 4, as described above, embodiments of the present invention thereby create black bands at the top and bottom of the video in the overscan area, i.e. the first and second overscan regions 420, 430. In many display modes, the overscan area (and hence, the first and second overscan regions 420, 430) will be hidden by default. However, in some display modes, for example when displaying 4k video, some or all of the overscan area may be shown on the display apparatus 130. In that event, the user will simply see black bands at the top and bottom of the picture, which appear more natural and less obtrusive than the random noise that may be introduced by other watermarking methods, such as ADB2.

In the present embodiment, the pixels within the first and second overscan regions 420, 430 are initially set to have the same pixel values relating to brightness and colour, which may be referred to respectively as an initial brightness value and an initial colour value. All pixels within the overscan area, including any pixels whose values will not subsequently be modified when embedding the additional data, may be set to have the same initial values of brightness and colour. In this way, the overscan area can be made to have a uniform appearance (e.g. black), which may appear less obtrusive to the viewer. However, in other embodiments different initial pixel values may be set for some pixels in the overscan area compared to other pixels in the overscan area.

After first setting the pixel values to the initial brightness and colour values, the pixel values of one or more pixels within the overscan area, in particular within the first and second overscan regions 420, 430, are then modified in the process of embedding the additional data. In this context, "modified" should be understood as meaning that the initial pixel values are replaced with different pixel values according to the binary values of the bits of additional data, as will be described in more detail below.

In the present embodiment, the process of embedding the bits of additional data in step S304 involves modifying pixel values in the first and second overscan regions 420, 430 according to an encoding scheme in which a first pixel value is indicative of a respective one of the plurality of bits having a first binary value. Here, the first pixel value refers to a value that is different to the initial pixel value, such that a pixel having the first pixel value can be distinguished from one having the initial pixel value. This approach can be understood as in effect comprising two steps of setting the chroma values of pixels in the first and second overscan regions 420, 430, wherein chroma values in the overscan regions 420, 430 are firstly initialised to the initial pixel value, which can be considered as deleting or blanking out video in the overscan regions 420, 430. Secondly, the initialised chroma values in some or all pixels in the overscan regions 420 430 are then changed again (i.e. modified) so as to encode data. In this approach, the chroma values of any pixels in the overscan regions 420, 430 that are not being used to encode additional data can be left as the initial pixel value.

In other embodiments, instead of following this two-step approach, all chroma values in the overscan regions 420, 430 can be set just once, such that in effect the additional data is encoded simultaneously with deleting/blanking video in the overscan regions 420, 430. In this approach, the chroma value of any given pixel in the overscan regions 420, 430 is either set to the initial pixel value (i.e. if no data is being encoded in that pixel/block), or is set to a different value if data is being encoded in that pixel/block.

In its simplest form, one such encoding scheme could involve encoding a binary '0' by keeping the initial pixel value, and encoding a binary '1' by changing (i.e. modifying) the pixel value to the first pixel value. A further variant on this approach, in which the value of each pixel signifies either a binary '1' or a binary '0', is to define two possible values (i.e. a first pixel value and a second pixel value) both of which are different to the initial pixel value. This approach may be useful in embodiments in which the receiver does not necessarily know in advance which pixels in the overscan area may have additional data encoded. For example, this may occur if the amount of additional data to be embedded can vary from one frame to the next, and is not known in advance by the receiver. Using this approach, the receiver can determine that any pixels within the overscan area that still have the initial pixel value have not been used to encode additional data, and therefore can ignore these pixels when attempting to extract the additional data from the current frame of video.

As an example, in the present embodiment two possible chroma values $C_1$ and $C_0$ are used to encode binary ones and zeroes respectively. The chroma values $C_1$ and $C_0$ are defined based on an initial chroma value of 128, and a chroma offset value, $C_{offset}$, as follows:

$$C_0 = 128 - C_{offset}$$

$$C_1 = 128 + C_{offset}$$

Depending on the embodiment, the value of $C_{offset}$ may be fixed such that the chroma values $C_1$ and $C_0$ are also fixed, and may be known in advance to both the transmitter and receiver, or $C_{offset}$ may be variable (e.g. may change from one frame to the next), as will be described in more detail later. An advantage of having the first and second pixel values (i.e. the values that encode additional data, $C_1$ and $C_0$) as being different from the initial pixel value is that the each of the first and second pixel values only differ from the initial pixel value (i.e. 128 in this example) by the value $C_{offset}$. If the initial pixel value was instead used to signify a binary zero, for example, (i.e. $C_0 = 128$), then to achieve the same distance between $C_0$ and $C_1$, $C_1$ would need to have a value of $128 + (2 \times C_{offset})$. This could potentially lead to more noticeable visual artefacts in the overscan regions 420, 430, since any pixels with the value $C_1$ would have chroma values that are further away from the black point of the video (i.e. 128 in this example).

Although in the present embodiment $C_1$ and $C_0$ each differ from the initial chroma value (128) by the same amount, i.e. $C_{offset}$, in other embodiments $C_1$ and $C_0$ may each differ from the initial chroma value by a different amount. For example, in another embodiment $C_1$ and $C_0$ may be defined as follows:

$$C_0 = 128 - nC_{offset}$$

$$C_1 = 128 + nC_{offset}$$

where n is a predefined integer that is known in advance to both the transmitter and receiver.

More generically, this may be written as:

$$C_i = 128 + Offset_i$$

where $Offset_i$ is an integer value between -128 and +127, and $C_i$ is a chroma value to be used for embedding additional data.

It should also be understood that although a value of 128 is used as the initial pixel value in the above-described examples, this should not be construed as limiting, since other values may be used in other embodiments. For example, 128 is chosen in the above examples as the black point for 8-bit video, but the chroma black point (which may also be referred to as a colour neutral point) for other video formats may have a different value. For instance, High Dynamic Range (HDR) video is likely to be 10-bits. The chroma black point for any given bit-depth of video, which may be used as the initial chroma value in the overscan region(s), i.e. the value of any pixels in the overscan region(s) that are not used to encode data, can be defined more generically as a colour neutral point, $N$, as follows:

$$N = 2^{(B-1)}$$

where $B$ is the bit-depth of the video.

Furthermore, in some embodiments a plurality of pixel values may be used when encoding the additional data, such that multiple bits of additional data (i.e. a subset of the total number of bits in the additional data) can be encoded in the value of a single pixel. For example, four chroma values can be defined as follows:

$$C_{00} = 128 - 2C_{offset}$$

$$C_{01} = 128 - C_{offset}$$

$$C_{10} = 128 + C_{offset}$$

$$C_{11} = 128 + 2C_{offset}$$

As can be seen, this approach allows two binary bits to be encoded in a single pixel, by setting the chroma value of the pixel to one of the four possible values $C_{00}$, $C_{01}$, $C_{10}$, $C_{11}$. This approach can be extended yet further in other embodiments to define any number of chroma values n, for example by defining chroma values according to the following scheme:

$$[128 - nC_{offset}, ..., 128 - 2C_{offset}, 128 - C_{offset}, 128 + C_{offset}, 128 + 2C_{offset}, ..., 128 + nC_{offset}]$$

where $n$ determines the number of chroma values, and may be a power of 2. Following this approach, using four chroma values allows two binary bits to be encoded in a single pixel, as described above, using eight chroma values allows three bits to be encoded in a single pixel, using sixteen chroma values allows four bits to be encoded in a single pixel, and so on. By increasing the number of pixel values (e.g. chroma values) that are used when encoding the additional data at the transmitter, it is therefore possible to embed a larger amount of additional data into a given number of frames of the video stream. Furthermore, in embodiments in which a plurality of pixel values are used to encode additional data, it is not essential for all of the encoding chroma values (e.g. $C_{00}$, $C_{01}$, $C_{10}$, $C_{11}$ etc.) to be equally spaced. In some such embodiments, the plurality of chroma values that are used for encoding could be irregularly spaced in terms of their numerical values, such that one pair of adjacent chroma values are closer to each other in terms of their values, whilst another pair of adjacent chroma values are further apart.

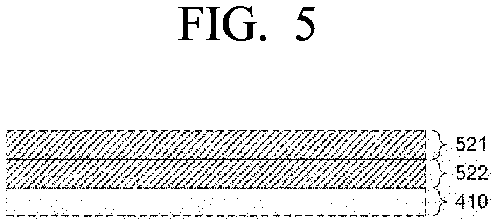

Referring now to Fig. 5, in the present embodiment the process of embedding the bits of additional data in step S304 involves modifying the one or more pixel values of a plurality of pixels within a first part 521 of the first overscan region, the first part 521 of the first overscan region being spaced apart from the content region 410 by a second part 522 of the first overscan region in which pixel values are not modified. In effect, the first overscan region is therefore extended by a band of unmodified pixels, all of which may have the same pixel values (e.g. black video, with a luma value of 16 and a chroma value of 128), that separates the part of the first overscan region that contains embedded additional data (i.e. the first part 521) from the content region 410 of the video frame.

This approach offers two advantages, compared to alternative embodiments in which modified pixels in the first overscan region 420 sit directly adjacent to the content region 410. Firstly, when video encoding is used, predictive video codecs may inadvertently copy chroma blocks with embedded data into the video below the black band of the first overscan region 420, potentially leading to visible artefacts in the content region 410. This effect may be referred to as 'chroma bleed', and can be prevented by the inclusion of the black band of unmodified pixels, i.e. the second part 522 of the first overscan region 420.

Secondly, video encoding algorithms may use an adaptive quantisation parameter (QP) to apply variable compression to different parts of the picture to optimise perceptual quality. In general, higher compression is applied to noisy blocks and blocks with sharp edges, and lower compression is applied to smooth flat areas. In embodiments in which video encoding with variable compression is applied after embedding the additional data, the inclusion of the black band of unmodified pixels, i.e. the second part 522 of the first overscan region (preferably to the edge of a video coding block boundary) means that there is no sharp edge in embedded blocks. This in turn leads to lower compression in the first part 521 of the first overscan region 420, i.e. the part in which the additional data is embedded, which makes embedding more robust.

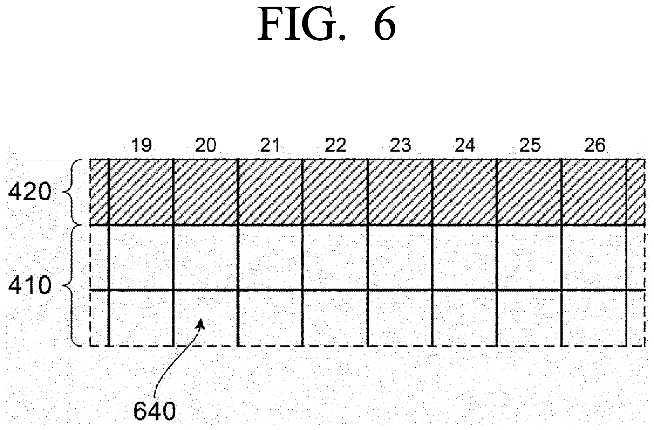

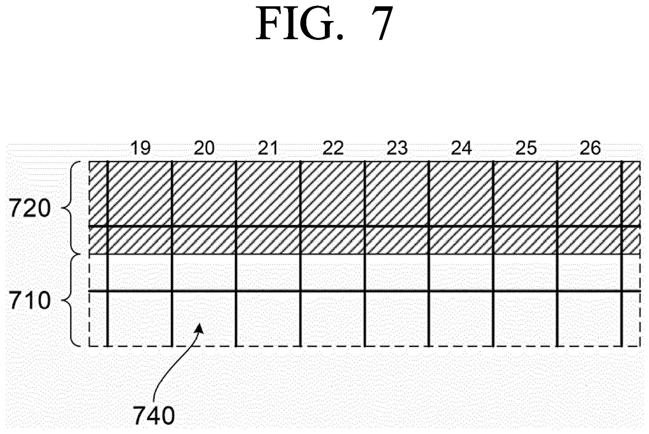

As described above, in some embodiments of the present invention the video stream may be compressed after embedding the additional data, using a video coding scheme that divides the video frame into discrete blocks of pixels, which may be referred to as coding blocks. In such embodiments, the size and position of these coding blocks may be taken into account when setting the size and position of the first and/or second overscan regions 420, 430, as will now be described with reference to Figs. 6 and 7.

As shown in Fig. 6, in the present embodiment the first overscan region 420 is aligned with the boundaries between video coding blocks in a video frame. In this embodiment, the embedding process in step S304 of Fig. 3 assumes that a number of parameters are standardised, in other words, are known in advance to both the embedder (broadcasting apparatus 110) and the extractor (TV 130). For example, the parameters may be fixed in advance and pre-programmed into both the broadcasting apparatus 110 and the TV 130. Alternatively, in some embodiments the parameters may be updated over time, for example, the TV 130 and/or broadcasting apparatus 110 may from time to time obtain updated parameters from an Internet server or another suitable source. Examples of parameters that may be standardised between the embedder and the extractor include:

Percentage of picture height to use for block embedding, $E_{height}$

Number of blocks in a line of video, $N_{blocks}$

Number of embedded block lines at the top or bottom of the video, $L$

FEC coding rate, $C$

The number of chroma values used for embedding, $N_{chroma}$

The embedder and/or the extractor can use these parameters to calculate a block width, $B_{width}$, and height, $B_{height}$, as follows:

$$B_{width} = P_{width}/N_{blocks}$$

$$B_{height} = P_{height}E_{height}/L$$

where $P_{width}$ and $P_{height}$ are the picture width and height, respectively, in pixels.

In Fig. 6, the grid of bold lines indicates the boundaries between coding blocks, which in the present embodiment are 16 × 16 pixels in size. When the height of the first overscan region 420 is set such that the boundary between the first overscan region 420 and the content area 410 coincides with a coding block boundary, as is the case in Fig. 6, results in lower QPs in the content area 410 and therefore lower compression.

It will be appreciated that the size of the coding blocks may not always be 16 × 16 pixels, as this will depend on the type of video encoding used. For example, in H.264 and MPEG-2, the coding blocks (referred to as Macroblocks in both H.264 and MPEG-2) are always 16 × 16. On the other hand, High Efficiency Video Coding (HEVC) uses blocks with variable size, referred to as Coding Units (CU), which range in size from 8 × 8 to 64 × 64. However, it is impossible to predict the CU size that an HEVC encoder will use, and so in embodiments of the present invention in which HEVC encoding is applied at the embedder-side (i.e. by the video encoder 214 at the broadcasting apparatus 110), a predetermined block size (e.g. 16 × 16) may be assumed when embedding the additional data. Similarly, in other embodiments in which video codecs with variable size coding blocks are used, the embedder may be configured to assume a predetermined coding block size (e.g. 16 × 16) in the process of embedding the additional data.

The effect of assuming a coding block size of 16 × 16 in the present embodiment is therefore to set the first and second overscan regions 420, 430 to have heights that are rounded to units of 16, and therefore have boundaries that coincide with the boundaries between coding blocks, as follows:

$$H_{top} = P_{height}E_{height} + (16 - P_{height}E_{height}\,mod\,16)\,mod\,16$$

$$H_{bottom} = H_{top} + 16\left\lfloor\frac{P_{height}}{16}\right\rfloor - P_{height}$$

Where $H_{top}$ and $H_{bottom}$ are the heights of the first overscan region 420 and the second overscan region 430, respectively. It should be appreciated that in other embodiments a different coding block size may be used, depending on the particular video format. For example, the calculation for $H_{bottom}$ may differ for standards such as HEVC which have mixed block sizes, and can therefore bound the video frame more accurately. As one example, HD 1080p video has a picture height of 1080 lines, which is not divisible by 16 for H.264, and therefore has an extra line of coding blocks to make the height equal to 1088 (which is divisible by 16, i.e. 1088/16 = 68). In HEVC on the other hand, 1080 is divisible by the smallest coding block size, 8, so the rounding in $H_{bottom}$ can be modified accordingly.

Although in the present embodiment the size of an overscan region is set to ensure that the boundary(s) between the overscan region and the content region coincide with coding block boundaries, in other embodiments this may not necessarily be the case. An example of one such embodiment is shown in Fig. 7, in which an overscan region 720 is offset with respect to boundaries between video coding blocks 740 in a video frame, such that the boundary between the overscan region 720 and the content area 710 does not coincide with coding block boundaries. If adaptive QP is used in both Figs. 6 and 7, then it is likely that higher compression will be used in the top row of blocks in the content area 710 of Fig. 7 compared to the top row of blocks in the content area 410 of Fig. 6, due to the presence of the boundary (i.e. a sharp edge) within the top row of blocks in the content are 710 in Fig. 7. Hence, the arrangement shown in Fig. 6 (i.e. where the boundary between the overscan region 420 and the content area 410 coincides with the coding block boundaries) is more likely to preserve image quality in the content area 410, since lower compression will be used in the top row of blocks compared to the arrangement shown in Fig. 7.

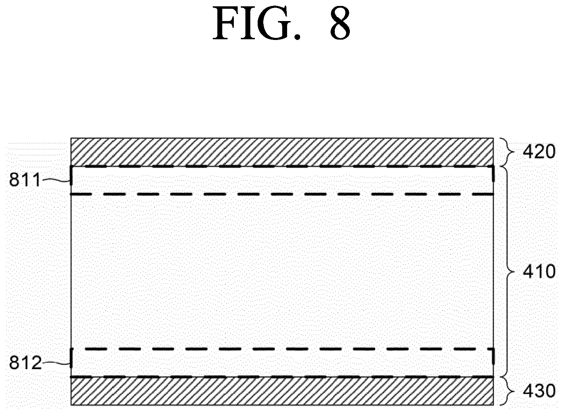

As briefly mentioned above, in some embodiments an adaptive embedding process may be used in step S304 of Fig. 3, in which the chroma values that are used when encoding data in the overscan area may vary from one frame to the next. An example of an adaptive embedding process will now be described with reference to Fig. 8, which illustrates a video frame comprising content regions adjacent to respective overscan areas into which additional data is embedded, according to an embodiment of the present invention.

In more detail, in the embodiment shown in Fig. 8 a first content region 811 is defined adjacent to the first overscan region 420, and a second content region 812 is defined adjacent to the second overscan region 430. The first content region 811 has a height less than that of a total area in the current frame in which image content is displayed (i.e. the height of the content area 410), such that the first content region only contains a part of the total image content within the current frame. Similarly, the second content region 812 has a height less than the height of the content area 410, such that the second content region 812 also contains only a part of the total image content within the current frame.

The first and second content regions 811, 812 are used to derive respective representative values that are used to choose appropriate chroma values for embedding additional data in the first and second overscan regions 420, 430 respectively, as will be explained in more detail below. However, in other embodiments an adaptive embedding process may choose the chroma values to be used in both overscan regions 420, 430 based on a representative value derived from the same part of the content area 410, instead of defining separate first and second content regions 811, 812. As a further alternative, in some embodiments the representative value used to choose the chroma values to be used in both overscan regions 420, 430 may be derived from the entire image area 410, rather than from only a part of the image area 410.

In the present embodiment the first content region 811 is immediately adjacent the first overscan region 420, and the second content region 812 is immediately adjacent the second overscan region 410. As will become apparent from the following explanation, the advantage of this is that chroma values can be chosen that are less likely to produce noticeable artefacts when displayed alongside the immediately adjacent image content in the first and second content regions 811, 812. However, in other embodiments one or both of the first and second content regions 811, 812 may be spaced apart from the respective first or second overscan region 420, 430.

Whilst the human eye can adapt to quite large dynamic ranges, its static dynamic range is less than can typically be displayed by modern TVs. In other words, it is difficult for the human eye to perceive a dark object on a TV screen that is adjacent to a bright object. Embodiments of the present invention can therefore be understood as exploiting the ability of TVs to display a wider dynamic range than can be perceived by the human eye, by using small variations in chroma values within the overscan region to encode data in a way that in practice remains imperceptible to the viewer (i.e. without introducing noticeable visual artefacts).

When an adaptive embedding process is used, the difference between the starting pixel value (e.g. chroma = 128) and a modified pixel value (e.g. $C_0$ or $C_1$) of each pixel used to encode additional data may be set according to a representative value derived from a current frame of the video stream. The representative value may be one that is indicative of a brightness and/or colour of pixels within the respective first or second content region 811, 812. For example, the representative value may be an average brightness and/or colour value of pixels within respective first or second content region 811, 812.

When choosing chroma values based on the chroma offset, $C_{offset}$, as described above, ideally $C_{offset}$ should be as small as possible to minimise visibility. However, if $C_{offset}$ is too small, then the degradations caused by subsequent processes that may be applied to the video stream, such as video compression, may make it difficult or even impossible to extract the embedded data. For example, this will occur when the noise introduced by video compression becomes greater than $C_{offset}$, such that the chroma variations used to encode the embedded data can no longer be distinguished from compression noise.

The choice of $C_{offset}$ is also made more difficult by varying video content. For example, very dark content may require lower values of $C_{offset}$ to make the embedding invisible. Conversely, brighter content can tolerate larger values of $C_{offset}$ before the embedding becomes noticeable to the viewer. In this regard, Weber's Law is often cited in the field of visual perception, according to which the minimum perceptible change in stimuli is proportional to the size of the original stimuli. When mapped to video, this means that in practice it is difficult for the viewer to discern relatively small changes in brightness when displayed alongside a bright part of the picture.

A further consideration when setting $C_{offset}$ is that dark areas tend to be easier to compress compared to lighter areas, since darker areas contain less detail (and hence less visual information) compared to lighter areas. This means that, when aiming to achieve a fixed bit-rate, less lossy compression needs to be applied to darker areas of video, which in turn will make it easier to extract the embedded block values at the receiver-side. Conversely, brighter videos often contain regions of high contrast and therefore are likely to contain more detail (and hence more visual information), in terms of sharp transitions between bright and dark areas, leading to greater compression being applied to the video. Hence as a general rule, in embodiments which employ an adaptive embedding process, a larger $C_{offset}$ value can be used for video frames with brighter content, and a smaller $C_{offset}$ value can be used for video frames with darker content. Using a larger $C_{offset}$ value for video frames with brighter content makes the embedding process more robust to the greater level of compression.

In the embodiment of Fig. 8, an average luminance is calculated in each of the first and second content regions 811, 812. In the present embodiment, the first and second content regions 811, 812 both have the same width and height, $A_{width}$ and $A_{height}$, as given by:

$$A_{width} = P_{width}$$

$$A_{height} = 2 \times H_{top}$$

where $P_{width}$ is the picture width, and $H_{top}$ is the height of the first overscan region 420. However, in other embodiments the height and width of the first and second content regions 811, 812 may be defined differently. For example, in other embodiments the height and width of the first and second content regions 811, 812 may not depend on the picture width or on the height of the first or second overscan regions 420, 430.

The average luminance value from the pixels in the first content region 811 is denoted as $A_{top}$, while the average luminance value from the pixels in the second content region 812 is denoted as $A_{bottom}$. In some embodiments, $A_{top}$ is used to determine a first $C_{offset}$ value for choosing chroma values in the first overscan region 420, whilst $A_{bottom}$ is used to determine a second $C_{offset}$ value for choosing chroma values in the second overscan region 430. However, in other embodiments the same representative value, for example an average luminance value, may be used to determine a single $C_{offset}$ value for choosing chroma values in both the first and second overscan regions 420, 430. In the present embodiment, a final average luminance value $A_{final}$ is calculated as follows, and then used to determine the $C_{offset}$ value for choosing chroma values in both the first and second overscan regions 420, 430:

$$A_{final} = \min(A_{top}, A_{bottom})$$

Setting $A_{final}$ as the minimum of the two calculated averages $A_{top}$ and $A_{bottom}$, as opposed to simply taking an average of $A_{top}$ and $A_{bottom}$, i.e. $(A_{top} + A_{bottom})/2$, can result in more appropriate chroma values being chosen for both the first and second overscan regions 420, 430. For example, if a simple average of $A_{top}$ and $A_{bottom}$ were used, this may cause problems if one part of the picture is much brighter than the other, since it could result in adapted chroma embedding values that are visible next to the darker region.

In some embodiments a plurality of content regions may be defined close, or adjacent to, each overscan region. For example, instead of a single first content region 811 as shown in Fig. 8, average luminance values may be calculated in a plurality of content areas with smaller widths. Purely by way of an illustrative example, four content areas of equal size may be defined adjacent to the first overscan region 420, each with a width equal to a quarter of the picture width, and four similar content areas may be defined adjacent to the second overscan region 430. A corresponding value of $C_{offset}$ may then be calculated for each of the content regions, such that different $C_{offset}$ values may be used at different x-coordinates across the width of the picture. Subdividing the first and second content areas 811, 812 in this way can allow the $C_{offset}$ values to be adapted more effectively for the picture content in any given frame, so as to take into account variations in contrast/brightness across the width of the frame.

Once the representative luminance value has been obtained, which in the present embodiment is $A_{final}$, then an adaptive chroma offset, $C'_{offset}$, is calculated as follows:

$$C'_{offset} = \left| C_{offset} + S \times \frac{\max(0, A_{final} - V)}{W - V} \right|$$

Where S is a first parameter, *V* is a second parameter, and *W* is the white point value. The first parameter, *S*, may be referred to as the "strength" parameter, and the second parameter, *V*, may be referred to as the "offset" parameter. When configuring the system, different values of *S* or *V* may be tested so as to select the values that give optimum performance in a given implementation. For SD and HD video, *W* = 235. The new chroma embedding values can then be derived using the adaptive chroma offset, $C'_{offset}$, as described above.

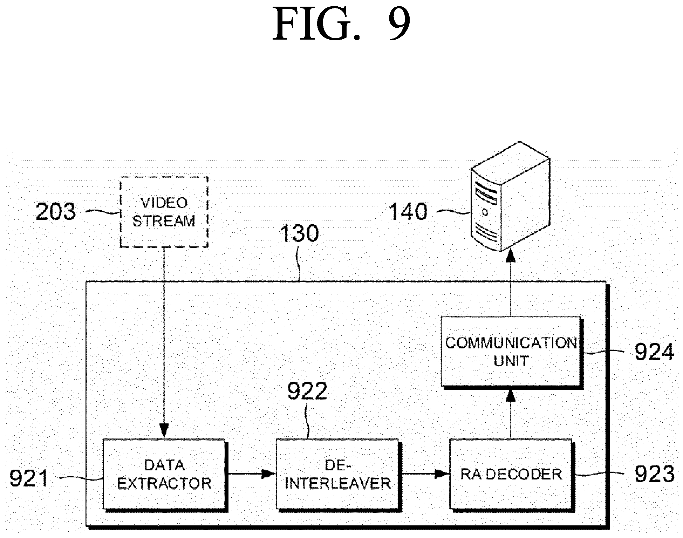

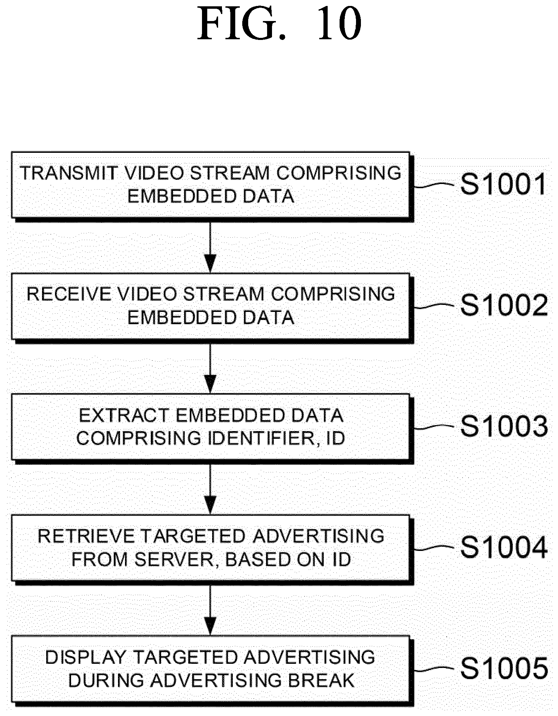

Referring now to Figs. 9 and 10, a method of performing an action at a display apparatus based on additional data embedded in a video stream will now be described, according to an embodiment of the present invention. In the present embodiment the additional data is used to provide targeted advertising, and the plurality of bits of additional data include an identifier, ID, that identifies the location of an advertising content server from which targeted advertising content can be retrieved. Accordingly, the action that is performed at the display apparatus 130 in the present embodiment is to retrieve and reproduce the targeted advertising content during an advertising break within the video stream. For example, the timing of the advertising break may be defined by the additional data, as described above. Alternatively, the display apparatus may determine the time at which to display the targeted advertising content in a different manner, for example at predetermined times or at predetermined intervals.

In the present embodiment, the ID takes the form of a unique identifier that the display apparatus 130 uses to retrieve a location from a look-up table. For example, the display apparatus 130 may have access to a look-up table (e.g. stored in local memory or stored remotely on a server) which records a location associated with each one of a plurality of unique IDs. The location may be stored in the form of a Uniform Resource Locator (URL), or may be in any other suitable form. The broadcaster can therefore signal to the display apparatus 130 which location to use when retrieving the targeted advertising content, by including the appropriate ID in the embedded additional data. The look-up table may be periodically updated, for example to add or remove sources of advertising content in the table.

In other embodiments, however, a look-up table may not be used. For example, in another embodiment the broadcaster may include part or the whole of a URL in the additional data, as opposed to transmitting an ID for use with a look-up table. For example, in embodiments in which part of a URL is included in the additional data, the display apparatus 130 may combine that part of the URL with a predefined part known in advance to the display apparatus 130. This approach may be used, for example, when the display apparatus 130 will always retrieve content from the same advertising server, such that the additional data only needs to specify a particular directory from which the targeted advertising content should be retrieved in any given instance.

Although the embodiment of Figs. 9 and 10 is described in relation to targeted advertising, it should be appreciated that similar principles may be applied to other forms of additional data, such as application data for launching a red-button application.

The display apparatus 130 comprises a data extractor 921, a de-interleaver 922, an RA decoder 923, and a communication unit 924. It will also be appreciated that the display apparatus 130 may comprise other components not shown in Fig. 9, notably a display screen or other means of outputting video content to be displayed.

Depending on the embodiment, each of the data extractor 921, de-interleaver 922, RA decoder 922, and communication unit 924 may be implemented as physically separate hardware components within the display apparatus 130, or the functionality of one or more of the data extractor 921, de-interleaver 922, RA decoder 923, and communication unit 924 may be combined in a single hardware component, such as a field-programmable gate array (FPGA) or application-specific integrated circuit (ASIC). Furthermore, in some embodiments one or more of the data extractor 921, de-interleaver 922, RA decoder 923, and communication unit 924 may be implemented as software modules, in the form of computer program instructions executed on one or more processors. In such embodiments, suitable computer program instructions for implementing the functionality of the data extractor 921, de-interleaver 922, RA decoder 923, and communication unit 924 may be stored in any suitable form of computer-readable storage medium accessible to one or more processors of the display apparatus 130.

First, in step S1001 the video stream comprising the plurality of bits of additional data is transmitted from the broadcasting apparatus 110 to the display apparatus 130, which receives the video stream in step S1002. In the present embodiment the display apparatus 130 receives the video stream via the STB 120, however, as described above, in other embodiments the display apparatus 130 may receive a video stream directly from the broadcasting apparatus 110.

Next, in step S1003 the data extractor 921 processes frames of the video stream to extract the plurality of bits of additional data from the overscan area. In the present embodiment, the broadcasting apparatus 110 uses interlacing and FEC coding when embedding the additional data, and accordingly the display apparatus 130 comprises the de-interleaver 922 for de-interleaving the embedded additional data, and the RA decoder 922 for decoding the FEC-coded additional data to retrieve the original bits of additional data. However, as noted above, in other embodiments interleaving and/or error correction coding may not be applied, and accordingly in such embodiments one or both of the de-interleaver 922 and RA decoder 923 may be omitted as appropriate.

Next, in step S1004 the display apparatus 130 uses the communication unit 924 to retrieve the targeted advertising content from the advertising content server, according to the location identified by the URL. Then, in step S1005 the display apparatus 130 reproduces the targeted advertising content during an advertising break within the video stream. Here, "during" the advertising break should be understood as meaning that content at some point within the advertising break is replaced with targeted advertising content, without necessarily implying that the targeted advertising content is displayed throughout the entire duration of the advertising break. In other words, in general terms in step S1005 the display apparatus 130 may reproduce the targeted advertising content either during part of, or the whole of, the advertising break.

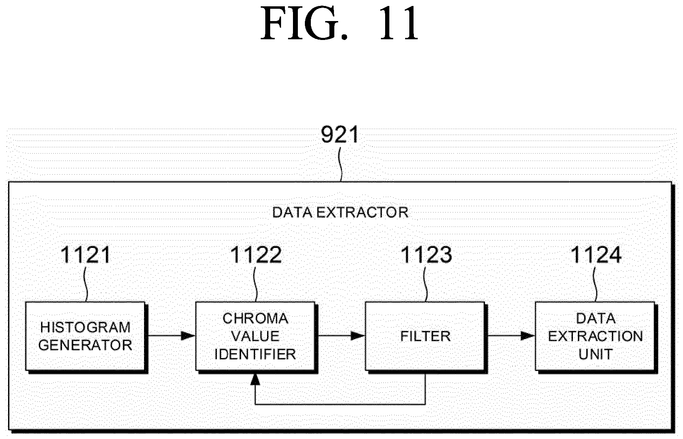

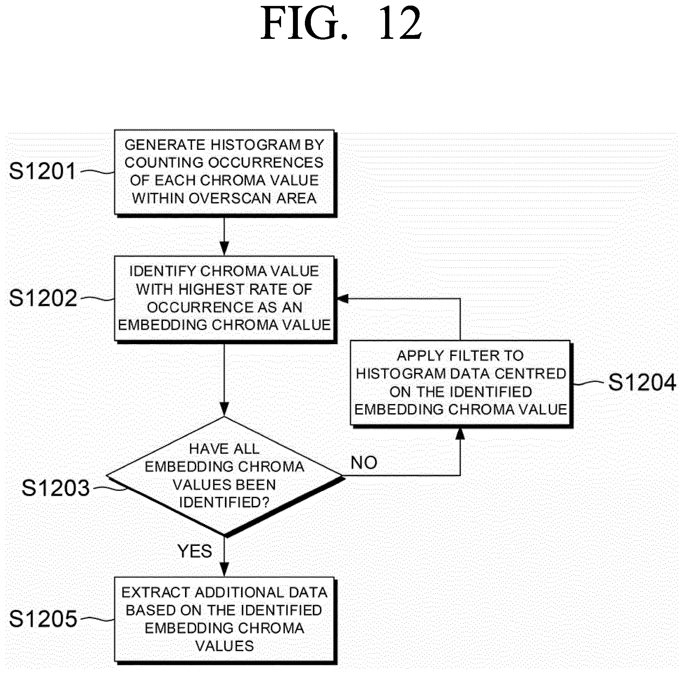

As has been described above, in some embodiments an adaptive embedding method may be used in which the chroma values that are used to encode the embedded data in the overscan area are not fixed, but can vary from one frame to the next. In such embodiments, the apparatus that receives and extracts the additional data, e.g. the display apparatus 130 of Fig. 1, needs to be able to identify the chroma values that have been used to encode additional data, for example, as distinct from other chroma values in the overscan area that may be the result of video compression. One approach for identifying adaptive chroma values at the extractor side will now be described with reference to Figs. 11 and 12.

Figure 11 illustrates apparatus for identifying adaptive chroma values used to encode embedded additional data in an overscan area of a video stream, according to an embodiment of the present invention. In the present embodiment, the apparatus is used as the data extractor 921 in the display apparatus 130 shown in Fig. 9, and may be referred as data extraction apparatus 921. The data extraction apparatus 921 comprises a histogram generator 1121, a chroma value identifier 1122, a filter 1123, and a data extraction unit 1124.

Depending on the embodiment, each of the histogram generator 1121, chroma value identifier 1122, filter 1123, and data extraction unit 1124 may be implemented as physically separate hardware components within the display apparatus 130, or the functionality of one or more of the histogram generator 1121, chroma value identifier 1122, filter 1123, and data extraction unit 1124 may be combined in a single hardware component, such as a field-programmable gate array (FPGA) or application-specific integrated circuit (ASIC). Furthermore, in some embodiments one or more of the histogram generator 1121, chroma value identifier 1122, filter 1123, and data extraction unit 1124 may be implemented as software modules, in the form of computer program instructions executed on one or more processors. In such embodiments, suitable computer program instructions for implementing the functionality of the histogram generator 1121, chroma value identifier 1122, filter 1123, and data extraction unit 1124 may be stored in any suitable form of computer-readable storage medium accessible to one or more processors of the display apparatus 130.

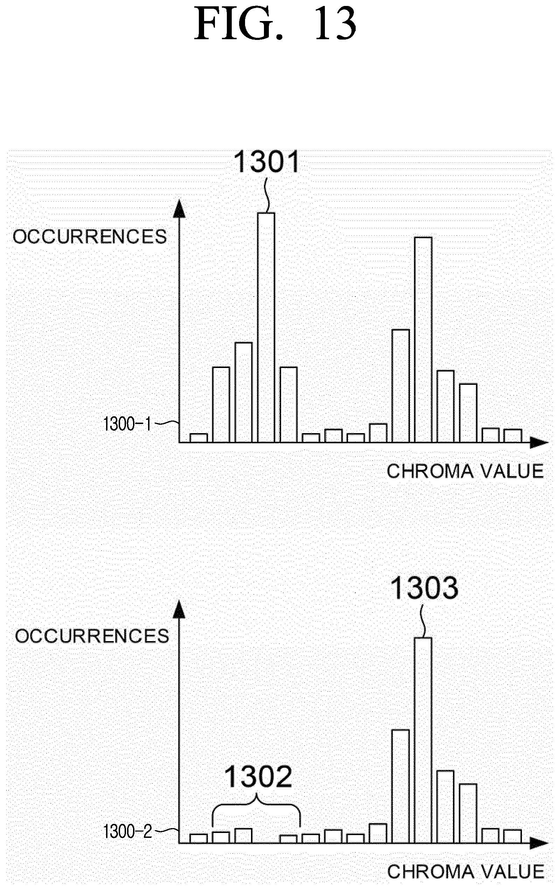

First, in step S1201 the histogram generator 1121 counts a number of times that each one of a plurality of chroma values occurs within the overscan area, so as to obtain histogram data indicative of a frequency of occurrence of the plurality of chroma values. The left-hand diagram in Fig. 13 illustrates an example of a histogram obtained by the histogram generator 1121 in step S1201. Then, in steps S1202 to S1204 the chroma value identifier 1122 and filter 1123 are used to identify a subset of chroma values among the plurality of chroma values based on the obtained histogram data, such that the subset of chroma values comprises modified chroma values used to embed the additional data, as will be described in more detail below. Then, in step S1205 the data extraction unit 1124 extracts the additional data based on the subset of chroma values that have been identified by the chroma value identifier 1122.

In more detail, in the present embodiment process of identifying the chroma values that are used for embedding (i.e. the subset of chroma values among all chroma values in the overscan area) assumes that certain parameters are known to both the embedder and the extractor. In particular, it is assumed that both the embedder and the extractor know in advance the number of chroma values, $N_{chroma}$, that are used to encode the embedded data.

After the histogram has been generated, in step S1202 the chroma value identifier 1122 starts by identifying the most frequent chroma value among the plurality of chroma values as a first one of the subset of chroma values. In other words, the chroma value of the highest peak 1301 in the histogram (1300-1) (i.e. the chroma value which occurs most frequently in the overscan area) is identified as being a chroma value that has been used to encode part of the additional data that is embedded in the overscan region, as opposed to chroma values that do not encode data. Using a peak detection approach to identify the chroma values in step S1202 can help to avoid a situation in which random chroma noise, which may have been introduced by the broadcast processing chain, is mistakenly identified as chroma values that are used to embed additional data. In this way, only the most common chroma values in the overscan area are used when extracting the additional data.

Next, in step S1203 the chroma value identifier 1122 checks whether all embedding chroma values have been identified, i.e. whether the total number of chroma values N that have been identified in the subset of values is equal to $N_{chroma}$. For example, if $N_{chroma} = 1$, then all chroma values have been identified as soon as the chroma value at the highest peak has been identified, in which case the process proceeds directly to step S1205 from S1203. On the other hand, if $N_{chroma}$ is greater than or equal to 2, and the number of chroma values that have been identified so far, $N$, is less than $N_{chroma}$, then at step S1203 the process proceeds to step S1204.

In step S1204, the filter 1123 applies a filter to the obtained histogram data centred on the chroma value that was just identified in step S1202 to obtain filtered histogram data. The right-hand diagram in Fig. 13 illustrates an example of the histogram after applying a filter centred on the chroma value 1301 that was previously identified as the highest peak in the histogram. Here, the filter 1123 is configured to set a frequency of occurrence of the identified chroma value to zero, and to reduce a frequency of occurrence of a predefined number of nearest neighbours 1302 (in the histogram 1300-2) of the identified maximum chroma value. In other words, the nearest neighbours of the identified chroma value are attenuated, which helps to prevent any of the nearest neighbours from subsequently being selected as a peak (i.e. from being identified as one of the subset of chroma values used to encode data).

After the filter has been applied in step S1204, the process returns to step S1202 and the chroma value identifier 1122 identifies the chroma value of the highest peak 1303 in the filtered histogram. It will be appreciated that this chroma value 1303 (in the histogram 1300-2) will be different to the one 1301 that was identified in the previous loop, since the frequency of occurrence of the previously-identified chroma value has now been set to zero by the filter 1123. The process repeats through steps S1202, S1203, and S1204 if necessary, until it is determined in step S1203 that the number of chroma values that have been identified, N, is equal to $N_{chroma}$.

At that point, the chroma value identifier 1122 has identified all chroma values that are needed to extract data, and the data extraction unit 1124 proceeds to extract the embedded additional data from the overscan area based on the $N_{chroma}$ values that have been identified in steps S1202-S1204. In step S1124, the data extraction unit can extract the data using an inverse of the mapping process described above in relation to step S304 of Fig. 3. The extracted binary bits can then be de-interleaved, and channel decoding performed, if necessary.

The method illustrated in Fig. 12 can be used to identify a plurality of chroma values within an overscan area that have been used to encode data, as distinct from other chroma values in the overscan area that may be the result of video compression. A similar histogram-based method may also be applied within a single video block (e.g. a 16 × 16 pixel video coding block) to identify the encoded chroma value for that block, and hence to determine the bit (or bits) of additional data encoded in that block. For example, this method can account for variations in the chroma values within a single block that may be introduced during video compression. When determining the chroma value of a block, this method starts by counting the frequency of occurrence of different chroma values within the block to generate a histogram, using a similar approach to step S1201 (albeit only applied to a single block in this instance).

The highest peak, in other words the chroma value which occurs most frequently within the video block, is then identified. Next, it is checked whether the chroma value of the identified peak is greater than or less than the initial chroma value, for example 128 in the case of 8-bit video. If the peak has a chroma value > 128, all chroma values less than 128 may then be filtered out (i.e. set to have a frequency of occurrence of zero in the histogram). On the other hand if the peak has a chroma value < 128, all chroma values greater than 128 may be filtered out. Since the process aims to identify a single chroma value for the entire block, and by definition a single value can only lie above or below the initial chroma value (i.e. cannot be both greater than or less than the initial chroma value), filtering any chroma values that are on the opposite side of the initial chroma value to the identified peak ensures that any spurious chroma values are ignored during the subsequent steps.

The process then applies a filter centred on the first identified peak and continues to search for further peaks, analogous to steps S1204 and S1202 in Fig. 12 but applied only to a single block. The final identified chroma value can then be determined as an average of the chroma values of all peaks that have been identified in the histogram for the current video block. For example, the average may be calculated as a weighted average of the chroma values of all peaks that have been identified, where the chroma value of each peak is given a weighting according to the number of times that that chroma value occurs in the video block. This approach can reliably identify the true chroma value that was encoded at the transmitter-end, even when intervening processes (e.g. video compression) may introduce noise in the form of variations in chroma values within the video block. Once a single chroma value has been identified for the video block, this can then be mapped to one or more encoded bits based on the known chroma values (e.g. $C_0$, $C_1$) that were used at the encoder, and the known encoding scheme.

Embodiments of the invention have been described above in which a display apparatus such as a TV receives a video stream from another device such as a STB, for example in the form of deinterlaced and decoded video frames sent by the STB to the TV over an interface such as a High-Definition Multimedia Interface (HDMI) connection, and then displays targeted advertising content on the basis of additional data extracted from the received video information. For instance, as has been described above the video stream may include additional data embedded in the overscan area, the additional data comprising a URL that can be used to retrieve targeted advertising content that is then displayed during an advertising break within the video stream. Depending on the implementation, the targeted advertising content may be displayed over part or all of the current frame. In such embodiments, the STB (or other device) that provides the video stream to the TV may itself be capable of modifying frames within the video stream, for example by overlaying Graphical User Interface (GUI) graphics or other visual information on top of the original frame.

However, HDMI connections or other similar interfaces, for example USB-C mini-HDMI, Thunderbolt, Display-Port and so on, may not include any mechanism for the STB to signal to the TV when a frame of video that is received at the TV has been modified. In such circumstances, a situation could therefore arise in which a user controls the STB to display GUI information, for example an Electronic Programme Guide (EPG), settings menu, application portal, or so on, but the GUI information is then partially or fully hidden by targeted advertising content displayed at the TV, causing inconvenience and frustration for the user. It would therefore be desirable to provide a mechanism by which the TV can detect when a received video frame has been modified relative to an original version of the frame, even when the video frame is received via an interface that does not allow for separate signalling to indicate that such modification has taken place (e.g. that the frame includes GUI information inserted by the STB). This is particularly relevant in the case of interfaces that are only capable of transmitting raw video information, such as an HDMI connection.

Being able to detect modifications in the video, for example GUI changes, could then allow the TV to suspend the output of targeted advertising content while the GUI is being presented to the user. This can avoid the targeted advertising content inadvertently being displayed on top of GUI elements (e.g. menus, buttons etc.), which could otherwise make it difficult or even impossible for the user to interact with the GUI. In some embodiments, rather than suspending the output of targeted advertising content when a modification in the video (e.g. a GUI change) is detected, the TV may take a different action, such as continuing to display the targeted advertising content but switching to a picture-in-picture (PIP) format instead.

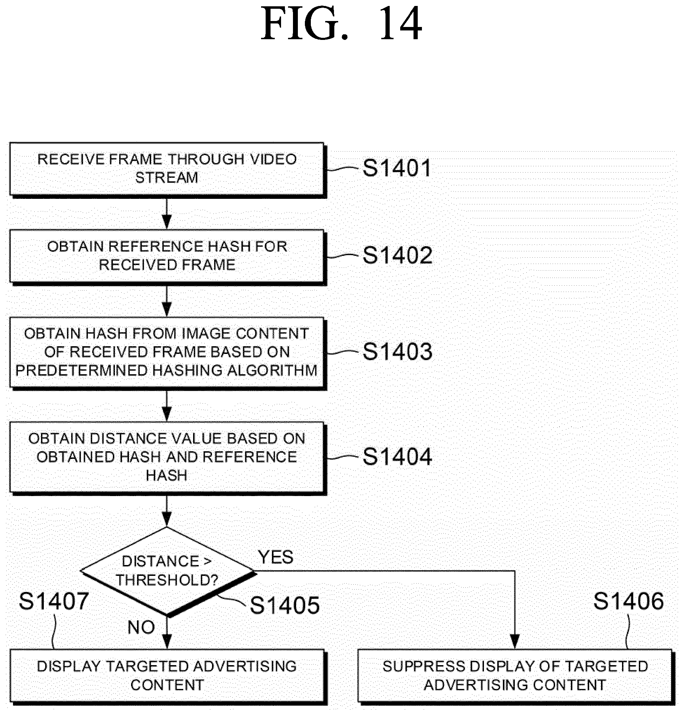

Examples of methods and apparatus for determining whether a frame of a video stream has been modified relative to an original version of the frame will now be described with reference to Figs. 14 to 18, according to embodiments of the present invention. Although such embodiments are described herein in the context of systems in which a TV uses the methods and apparatus to determine when an STB has overlain GUI graphics on top of the original image content in a frame of video, it should be appreciated that the same principles may be used to detect any type of modification relative to the original frame. For example, this approach may be used to evaluate broadcast signal reliability, by checking how closely the received video matches the as-transmitted video. In some embodiments a similar approach can be used to compare the received video to a reference hash of specific content, for example an advert for a particular product, to automatically detect when the advert for that product appears in the broadcast stream (e.g. such that the TV could automatically take further action as appropriate, for instance by displaying a link to the product manufacturer's website or links to online product listings of that product on retailers' websites). Similarly, although such embodiments are described in the context of systems that embed and extract additional data in the overscan area of a video frame, for example using any of the approaches described above with reference to Figs. 1 to 13, it should be appreciated that the principles described below with reference to Figs. 14 to 18 could also be applied in systems that do not include any such embedded data.

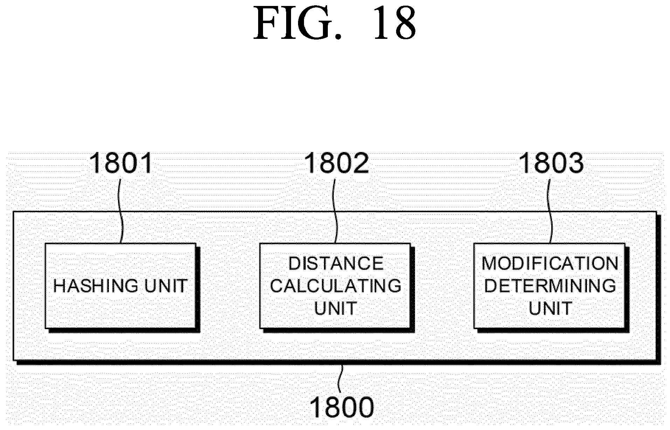

Referring now to Fig. 14, a flowchart is illustrated showing a method of determining whether a frame of a video stream has been modified relative to an original version of the frame, according to an embodiment of the present invention. A method such as the one shown in Fig. 14 may be implemented by apparatus 1800 such as that illustrated in Fig. 18, which may for example be included in the display apparatus 130.

First, in step S1401 a display apparatus 130 receives a frame of video through a video stream. In the present embodiment the frame of video is received from an STB 120. For example, when the STB 120 receives a video stream in a format in which the video frames are encoded and interlaced, the display apparatus 130 may receive frames of decoded and de-interlaced video from the STB 120 via any suitable interface, for example an HDMI connection. In other embodiments the display apparatus 130 may receive the broadcast video stream directly. For example, if encoding and/or interlacing are used in the broadcast video stream then the display apparatus 130 itself may perform decoding and/or de-interlacing as appropriate, to obtain individual frames of the video. Furthermore, embodiments of the present invention are not limited to interlaced video, and in other embodiments other video formats may be used (e.g. progressive video).

Next, in step S1402 the display apparatus 130 obtains a reference hash for the received video frame. Here, the term "reference hash" is used to denote a hash value that has been calculated from an original version of the received video frame using a predefined hashing algorithm. The term "original version" refers to a version of the video frame prior to any such modification that the display apparatus 130 aims to detect. For example, in the context of the system shown in Fig. 1 in which a frame of broadcast video is received at a STB 120, which may modify the video frame before sending it to the display apparatus 130 (e.g. by overlaying GUI graphics on top of image content in the video frame), the reference hash should be calculated before the frame is modified by the STB 120. The reference hash comprises a fixed number of bits whose value is dependent on the contents of the image. In other words, if the contents of an image changes, the value of the resulting hash that is calculated from the image will also change.

In the present embodiment, the reference hash is calculated at the broadcaster-side of the system, for example at the broadcasting apparatus 110 or by another entity in communication with the broadcasting apparatus 110. The reference hash for a given frame of video is then embedded into that frame in the video stream in the form of additional data embedded in the overscan area, using any of the methods disclosed herein. Hence, in the present embodiment, obtaining the reference hash in step S1402 involves extracting the reference hash from the received frame.

In another embodiment, the reference hash may be calculated at the receiver-side of the system, for example by the STB 120. In such embodiments, the STB 120 may then encode the reference hash into the overscan area. For example, part of the overscan area may be reserved for use by the STB 120 (i.e. as distinct from part of the overscan area which contains encoded additional data added by the broadcasting apparatus 110), to provide a mechanism for the STB 120 to communicate information to the TV 130 through the video stream. In some such embodiments, the STB 120 may write data into the reserved part of the overscan area to signal to the TV 130 that GUI data is present (e.g. in the form of a Boolean TRUE/FALSE flag). In such embodiments the TV 130 may not need to implement the present hashing-based method at all to detect GUI changes, since the TV 130 could instead rely on the Boolean flag inserted by the STB 120 to check whether GUI data is present. However, in some embodiments the TV 130 could still implement the present hashing-based method to detect changes in the video, for example to automatically detect when there is a degradation in picture quality between the STB 120 and TV 130 (e.g. due to noise being introduced via a poorly-shielded cable, other system fault).

In other embodiments, the reference hash may be obtained from the received video stream via another method. For example, the reference hashes for frames in a video stream could be included in metadata that is transmitted in the video stream. In some such embodiments, to avoid significantly increasing the amount of metadata, reference hashes may only be provided for certain selected frames within the video stream. For example, a reference hash may be calculated for every tenth frame of video, in which case the number of reference hashes to be included in the metadata will be just 1/10th of the total number of frames of video. It will be appreciated that in other embodiments reference hashes may be calculated at different intervals other than every tenth frame.

As a further alternative, in some embodiments the display apparatus 130 may obtain the reference hash from a source other than from the received video stream. For example, in some embodiments the reference hash may be retrieved from an Internet server. However, one advantage of providing each reference hash as embedded data within the respective frame to which the reference hash relates (e.g. in the form of additional data embedded in the overscan area), is that this avoids any potential problems with synchronisation that could arise if the reference hash was provided via another mechanism (e.g. retrieved from a server). In other words, in embodiments in which the display apparatus 130 extracts the reference hash from the received video frame in step S1402, the display apparatus 130 can be certain that the reference hash relates to the frame of video from which it was extracted, as opposed to relating to any other frame of the video stream.

Then, in step S1403 the display apparatus 130 obtains a hash of the received frame. The display apparatus 130 may calculate the hash itself in step S1403, for example using the hashing unit 1801. Alternatively, the display apparatus 130 may obtain the hash in step S1403 by transmitting part or all of the data for the video frame (e.g. pixel values, such as chroma and luma) to another device which calculates the hash and then returns the calculated hash to the display apparatus 130. In step S1403, the hash is calculated using the same predefined hashing algorithm that was used when calculating the reference hash for that frame. The predefined hashing algorithm should therefore be known in advance to both the display apparatus 130 and to the apparatus that is used to calculate the reference hash, for example the broadcasting apparatus 110.

Although in Fig. 14 step S1403 is shown as being performed after step S1402, it will be appreciated that step S1403 is not dependent on the reference hash having first been obtained in step S1402. As such, in some embodiments step S1403 may be performed before step S1402, or steps S1402 and S1403 may be performed substantially in parallel rather than sequentially.

As described above, in the present embodiment the received frame of video includes embedded data in an overscan area of the frame. In particular, the embedded data includes the reference hash. Clearly, the reference hash must necessarily be calculated from the video frame before it can be embedded in the overscan area, since the value of the reference hash is not known until it has been calculated. Once the reference value has been embedded by modifying pixel values in the overscan area, using methods such as those described above, the content of the frame (specifically, the overscan area) therefore changes as a consequence of the reference value being embedded. Accordingly, if a hash was subsequently calculated from the entire frame including the overscan area, the hash would not be a match for the reference hash since the content of the overscan area has changed since the reference hash was calculated.

To mitigate this potential issue, in embodiments in which the reference hash is embedded in the overscan area, the predefined hashing algorithm that is used to calculate both the reference hash and the hash of the received frame may exclude the overscan area when calculating the respective hash values. For example, in the case of the video frame shown in Fig. 4, the predefined hashing algorithm may calculate a hash value based on the image content in the content area 410 of the frame, excluding the overscan area (e.g. first and second overscan regions 420, 430) of the frame.

Next, in step S1404 the display apparatus 130 obtains a distance value indicative of a difference between the hash that was obtained in step S1403 and the reference hash that was obtained in step S1402. For example, the display apparatus 130 may include the distance calculating unit 1802 for obtaining the distance value in step S1404. Here the term "distance value" refers to a value that is obtained based on a comparison between the obtained hash and the reference hash, and which is indicative of an extent to which the obtained hash differs from the reference hash.

Then, in step S1405 the display apparatus 130 compares the obtained distance value to a threshold. In the event that the obtained distance value exceeds a threshold, it is determined that the first frame has been modified relative to the original version of the first frame. For example, the display apparatus 130 may include the modification determining unit 1803 for comparing the obtained distance value to the threshold in step S1405 and consequently determining whether the first frame has been modified. The display apparatus 130 may then take appropriate action according to the determination in step S1405.

In the present embodiment, in response to a determination in step S1405 that the first frame has been modified relative to an original version of the first frame (i.e. that the distance value exceeds the threshold), the display apparatus 130 proceeds to step S1406 and suppresses the displaying of the targeted advertising content until a subsequent determination that a subsequent frame of the video stream has not been modified relative to an original version of the subsequent frame. On the other hand, in response to a determination in step S1405 that the first frame has not been modified relative to an original version of the first frame (i.e. that the distance value is less than the threshold), or in response to a determination that the subsequent frame of the video stream has not been modified relative to an original version of the subsequent frame, the display apparatus 130 proceeds to step S1407 and permits the targeted advertising content to be displayed at the display apparatus.

In some embodiments, in step S1405 the display apparatus 130 may only proceed to step S1406 in response to a determination that the threshold distance has been exceeded for a certain number of consecutive frames. This can provide a more reliable system, by helping to avoid a situation in which the image hash for a single frame exceeds the threshold for some other reason than a GUI change (e.g. intermittent noise or degradation in signal quality) and inadvertently triggers the display apparatus 130 to suppress the display of targeted advertising content, even though no GUI data is present. By waiting until the distance threshold has been exceeded for a certain number of consecutive frames, it is more likely that the change is due to the presence of GUI data and therefore the display apparatus 130 can proceed to step S1406 and suppress the targeted advertising content.

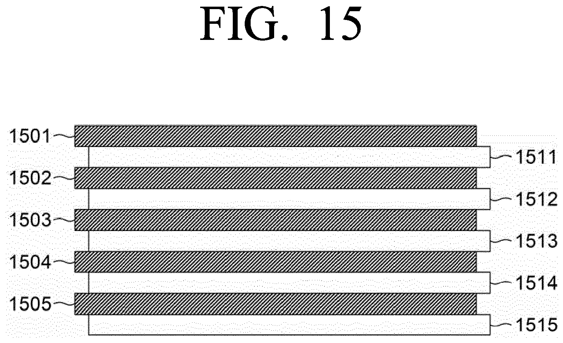

As described above, in some embodiments a video stream may comprise interlaced video. Interlaced video includes two fields in one frame, where each field represents a picture at a different time instance in the video. An example of a frame in an interlaced video stream is illustrated in Fig. 15, according to an embodiment of the present invention. The frame comprises a first plurality of horizontal strips 1501, 1502, 1503, 1504, 1505 that together make up a first field, and a second plurality of horizontal strips 1511, 1512, 1513, 1514, 1515 that together make up a second field. Each horizontal strip of the first and second fields comprises one or more rows of pixels. The horizontal strips of the first and second fields are arranged in alternating (i.e. interlaced) fashion as shown in Fig. 15, hence the term "interlaced" video. When the frame is deinterlaced, for example in the de-interlacer 923 of Fig. 9, the de-interlacer 923 will typically output one picture per field, where each output picture represents a different time instance. In other words, each frame of interlaced video can be deinterlaced to obtain a first picture and a second picture, the first picture comprising pixels included in said portions of the first field and the second picture comprising pixels included in said portions of the second field.

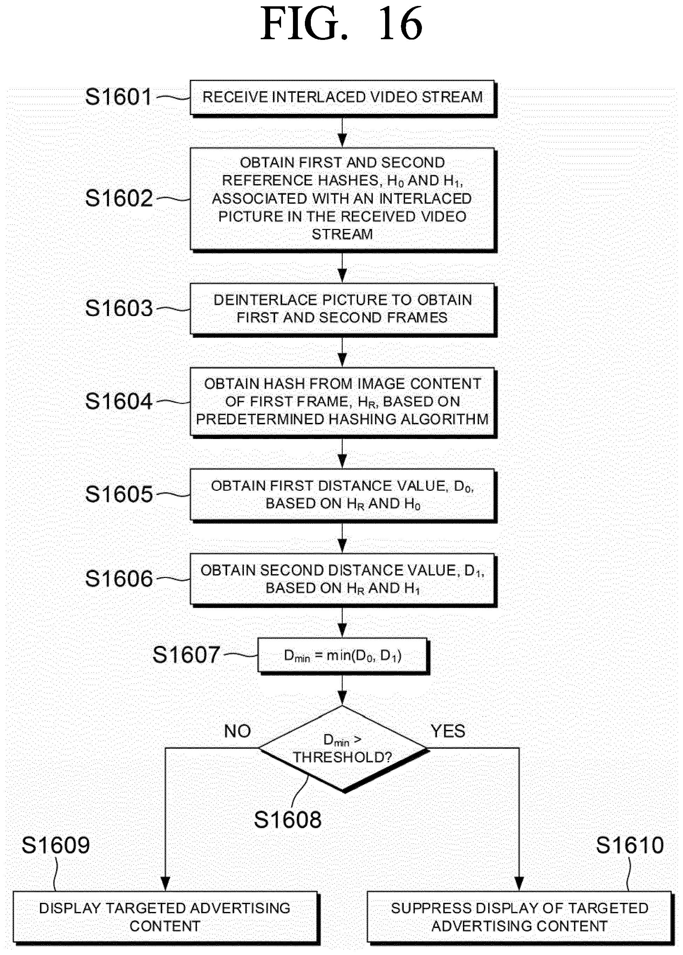

A method of determining whether a frame of interlaced video has been modified relative to an original version of the frame will now be described, with reference to Fig. 16. The method can be applied in embodiments in which the received video stream includes two reference hashes for each picture of interlaced video, one relating to the first field and one relating to the second field, where the video stream does not indicate which one of the reference hashes relates to which field. In other words, the video stream does not indicate which field among the two interlaced fields was used to derive which one of the two reference hashes. A method such as the one shown in Fig. 16 may be implemented by apparatus such as that illustrated in Fig. 18, which may for example be included in the display apparatus 130.

The method starts by receiving an interlaced video stream in step S1601, for example at the STB 120 in Fig. 1. Then, in step S1602 the STB 120 obtains first and second reference hashes $H_0$, $H_1$ associated with a picture of the interlaced video stream, for example by extracting the first and second reference hashes $H_0$, $H_1$ from an overscan area of the picture. At this stage, the STB 120 cannot know which of the first and second reference hashes $H_0$, $H_1$ relates to which of the two frames that are contained with the picture of interlaced video.

Next, in step S1603 the de-interlacer 923 de-interlaces the received picture to obtain the first and second frames, which are then transmitted from the STB 120 to the display apparatus 130 (e.g. via an HDMI connection). In some embodiments, de-interlacing may be performed at the display apparatus 130, in which case step S1603 may be performed at the display apparatus 130 as opposed to at the STB 120. In other words, steps S1602 and S1604 onwards are performed at the apparatus that needs to perform the comparison between image hashes to detect modifications to the video, which in the present embodiment is the display apparatus 130, whereas step S1601 and S1603 may be performed either at the STB 120 or at the display apparatus 130, depending on which device is responsible for deinterlacing in any given implementation.

In step S1603 the first and second frames are received at the display apparatus 130. Since the first and second frames were originally received by the STB 120 in the same interlaced picture, the overscan areas of the first and second frames contain the same information. In other words, the overscan area is common to both the first and second frames. Hence, for each of the first and second frames, the overscan area contains both the first and second reference hashes $H_0$, $H_1$.

Next, in step S1604 the display apparatus 130 uses the predefined hashing algorithm to obtain a hash of the first frame, i.e. derived largely from the first field of the interlaced picture. The display apparatus 130 may derive the hash of the first frame itself, for example using the hashing unit 1801. In some embodiments which use interlacing, the outputted frame may be based on the first field but may also use information from adjacent fields (i.e. fields that occur before and after the current field in time). Since the first and second frames have been deinterlaced at this point, any portions of the second frame in the interlaced picture are excluded from the hash calculation in step S1604, since the hash value is calculated only from the deinterlaced first frame.

Then, in step S1605 the display apparatus 130 compares the hash that was obtained in step S1604 to the first reference hash $H_0$, to obtain a first distance value $D_0$. Also, in step S1606 the display apparatus 130 compares the hash that was obtained in step S1604 to the second reference hash $H_1$, to obtain a second distance value $D_1$. For example, the display apparatus 130 may include the distance calculating unit 1802 for obtaining the first and second distance values in step S1605 and S1606. Although in Fig. 16 step S1606 is shown as being performed after step S1605, it will be appreciated that step S1606 is not dependent on the first distance value having already been obtained in step S1605. As such, in some embodiments step S1606 may be performed before step S1605, or steps S1605 and S1606 may be performed substantially in parallel rather than sequentially.

Then, in step S1607 the display apparatus 130 selects the smallest one of the first and second distance values $D_0$, $D_1$ as the distance value. Here, the minimum of the two distance values $D_0$, $D_1$ is chosen because it can be expected that the one of the first and second frames that was not used to calculate the first reference hash will produce a hash that differs from the first reference hash by a greater amount, and hence will result in a large distance value being obtained in step S1605 or S1606.

Once the smaller of $D_0$ and $D_1$ has been selected, the display apparatus proceeds to steps S1608, S1609 and S1610 to decide whether to allow targeted advertising content to be displayed. Steps S1608, S1609 and S1610 can be performed in the same manner as steps S1405, S1406 and S1407 of Fig. 14, and hence a detailed explanation of such steps will not be repeated here.

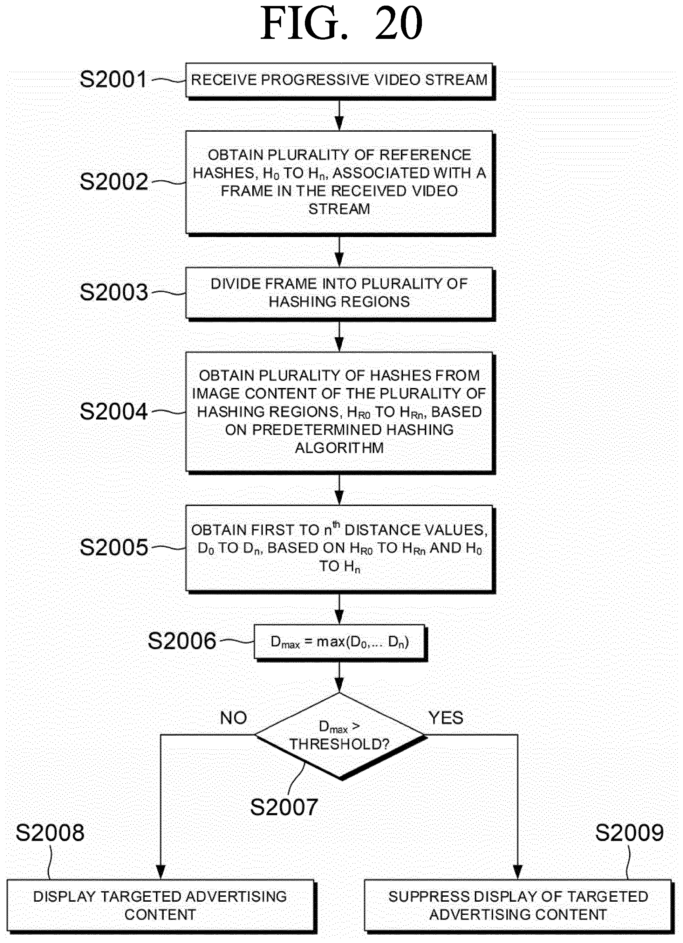

In some embodiments, a method similar to the one shown in Fig. 16 may be applied to progressive video rather than interlaced video. An example of such a method will now be described with reference to Fig. 20. In this case, the apparatus that calculates the reference hashes (e.g. the broadcasting apparatus 110) may divide a frame of progressive video into a plurality of regions and a separate hash value calculated for each region. Here, the plurality of regions from which hash values are calculated may be referred to as "hashing regions", as distinct from other types of regions described herein (e.g. overscan regions and content regions). For example, a frame of progressive video may be divided into two hashing regions, one comprising the top half of the frame and the other comprising the bottom half of the frame. In some embodiments the frame may be divided into more than two regions. The reference hashes for the plurality of hashing regions can then be provided to the receiver-side apparatus (e.g. the STB 120 or TV 130) via any of the mechanisms described herein, such as embedding the reference hashes for a particular frame of progressive video in an overscan region of that frame.

The receiver-side apparatus, such as the STB 120 or TV 130, can then implement the method shown in Fig. 20 to use the reference hashes for the plurality of hashing regions to determine whether the frame of progressive video has been modified relative to its original version. It will be appreciated that many of the steps in Fig. 20 can be carried out in a similar manner to the corresponding steps in Fig. 16, and for the sake of brevity a detailed explanation of similar aspects to both methods will not be repeated here.

For example, steps S2001 and S2002 may be similar to steps S1601 and S1602 described above in relation to Fig. 16, albeit that the video stream received in step S2001 comprises progressive video rather than interlaced video, and the reference hashes $H_0$ to $H_n$ (of which there may be two or more, depending on the number of hashing regions used) obtained in step S2002 are associated with the frame of progressive video. The method in Fig. 20 differs from Fig. 16 in that in step S2003 the frame of progressive video is divided into a plurality of hashing regions, each corresponding to a respective one of the plurality of hashing regions used at the broadcaster-side to calculate one of the reference hashes.

Then, in step S2004 a plurality of hashes of received image content, $H_{R0}$ to $H_{Rn}$, are obtained from the image content of the plurality of hashing regions. Next, in step S2005 a respective distance value, $D_0$ to $D_n$, is calculated for each of the hashing regions based on the reference hash for that region, $H_n$, and the corresponding hash that was calculated in step S2004, $H_{Rn}$.

Next, in step S2006 the largest of the obtained distance values is determined, $D_{max}$, and this distance value is compared to the threshold in step S2007. The TV 130 then either displays targeted advertising content in step S2008 or suppresses the display of advertising content in step S2009 according to whether $D_{max}$ was above or below the threshold. It will be appreciated that steps S2007, S2008 and S2009 can be performed in a similar manner to steps S1608, S1609 and S1610 of Fig. 16, and hence a detailed explanation will not be repeated here.

By dividing a frame of video into a plurality of hashing regions in this way, and providing a reference hash for each region, the receiver (e.g. the STB 120 or TV 130) can determine whether the image content in any given hashing region has been modified relative to its original content. Taking the maximum among the distance values in step S2006 ensures that a modification only has to be detected in a single one of the hashing regions for the receiver to suppress the display of advertising content, since the decision of whether or not to display the advertising content is based on the distance value for the hashing region that produced the largest difference value (i.e. the region that has been modified furthest from its original image content). This approach can allow the receiver to detect relative minor changes in the image content, such as small STB GUI objects, more reliably than if a single reference hash is provided for the entire frame.

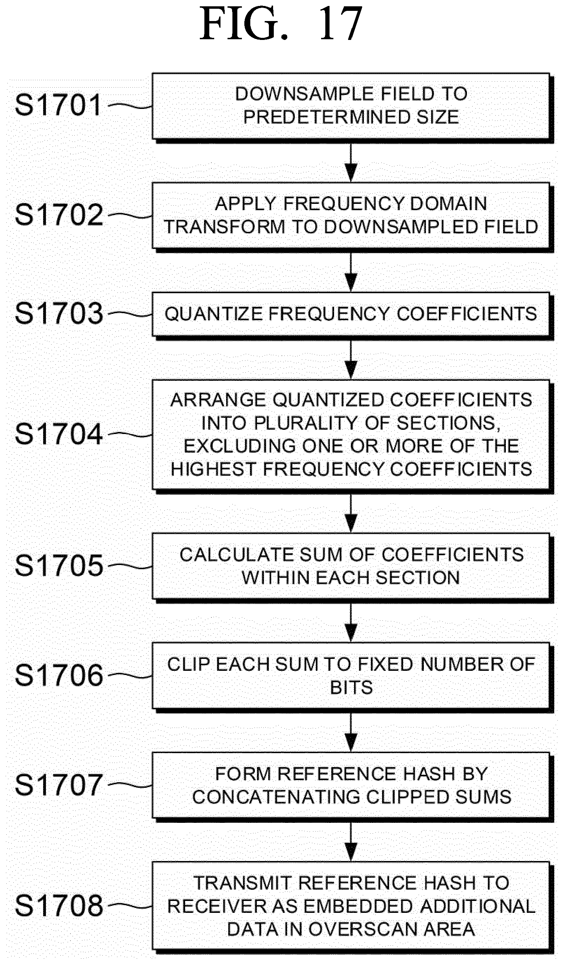

Referring now to Fig. 17, a flowchart is illustrated showing a method of obtaining a hash from image data of a video frame, according to an embodiment of the present invention. An algorithm such as the one shown in Fig. 17 can be used as the predefined hashing algorithm in the methods of Figs. 14 and 16 to calculate a reference hash or a hash of a received frame. In some embodiments, methods such as those described above with reference to Figs. 14 and 16 could be implemented with a predefined hashing algorithm different to the one shown in Fig. 17. For example, in some embodiments the method of Fig. 14 or the method of Fig. 16 may use other types of hashing functions, such as an image hash or perceptual hash, as the predefined hashing algorithm.

Continuing with reference to Fig. 17, in the present embodiment the predefined hashing algorithm starts by downsampling the field/frame to a predetermined size in step S1701. Here, whether the image content that is used to calculate a hash is referred to as a "field" or "frame" may depend on the video standard that is used. For example, a picture may contain two interlaced "fields", or one progressive "frame". As described above, when interlaced video is used, the outputted frame may be the content of a single one of the interlaced fields or may use information from adjacent fields. In some embodiments downsampling may be omitted. However, the advantage of including downsampling (i.e. step S1701) is that the computational complexity of subsequent steps can be reduced, and the size of the final hash can be reduced.

In the present embodiment, in step S1701 the frame is downsampled to a fixed size of $32 \times 16$ pixels. In other embodiments a different downsampling size may be used. For example, when a Discrete Cosine Transform (DCT) is used in the hashing algorithm, the downsampling size may advantageously be chosen to be a power of two for efficient computation of the DCT. In some embodiments, in step S1701 the frame may be cropped, instead of or in addition to downsampling the frame. For example, when the method of Fig. 17 is applied to a video frame that comprises one or more overscan regions, the video frame may be cropped to remove the overscan region(s) in step S1701. In this way, the hash will only be calculated from the image content of the frame.

Next, in step S1702 a frequency domain transform is applied to the downsampled frame to obtain a plurality of frequency coefficients. Various forms of frequency domain transform could be used in step S1702. In the present embodiment a Type II DCT is used in step S1702, but in other embodiments a different form of frequency domain transform could be used, such as a Discrete Sine Transform.

Next, in step S1703 the frequency coefficients are quantized. In the present embodiment, the frequency coefficients are quantized in step S1703 by dividing each frequency coefficient by a fixed value. In some embodiments, different divisors may be used for different coefficients. An advantage of quantization is that the sums of groups of coefficients can be made to fit within a certain number of bits. However, in other embodiments the quantization step (i.e. step S1703) may be omitted.

Then, in step S1704 at least some of the quantized coefficients are arranged into a plurality of groups. Depending on the embodiment, all of the quantized coefficients may be included in the plurality of groups, or some of the quantized coefficients may be excluded such that the resulting plurality of groups (i.e. when considered as a whole) only contain a subset of the total number of quantized coefficients.

The plurality of groups, which may also be referred to as sections, may have different sizes. Here, the "size" of a section refers to the number of coefficients that are contained in that section. In other words, a section with a smaller size contains fewer quantized coefficients than a section with a larger size. For example, lower frequency coefficients may be grouped into sections with smaller sizes compared to sections that contain higher frequency coefficients. It can be advantageous to group quantized lower frequency coefficients into smaller sections and to group quantized higher frequency coefficients into larger sections, since lower frequency coefficients are typically more important than higher frequency coefficients in terms of perceptual importance, and are typically of larger magnitude compared to higher frequency coefficients.

In some embodiments, a certain number of the highest frequency coefficients may be excluded when arranging the quantized coefficients into groups in step S1704. Excluding the highest frequency coefficients in this way can reduce the risk of false positives due to noise when the resulting hash is used (e.g. in the methods of Figs. 14 and 16), since the highest frequency coefficients are typically more likely to contain noise than the lower frequency coefficients.

In the present embodiment, the quantized coefficients are arranged in step S1704 by reading the quantized coefficients of the DCT matrix into a one-dimensional (1D) array in zig-zag scan order, such that the lowest frequency coefficients appear first in the 1D array and the highest frequency coefficients appear last in the 1D array. In image and video compression, the lowest frequency coefficients are generally considered to be the most important in terms of the visual representation of an image. The advantage of using a zig-zag scan pattern when arranging the quantized coefficients into sections is that it is then simple to reduce the number of coefficients by simply cutting off, i.e. discarding, the least important high-frequency coefficients that appear at the end of the resulting 1D array.

Here, it should be appreciated that a zig-zag scan is described merely by way of an example, and other ways of arranging quantized coefficients into sections may be used in other embodiments. For example, different image and video coding standards use different scan orders in different standards. Hence, in another embodiment a different scan pattern (i.e. other than a zig-zag scan) may be selected, as appropriate for the coding standard used in that embodiment. A suitable scan pattern can be selected according to the embodiment, such that the quantized coefficients are read from a 2D array into a 1D array in order of their importance. For example, in some embodiments a raster scan rather than a zig-zag scan may be used.

Next, in step S1705 a sum of the quantized coefficients is calculated for each group, and in step S1706 each sum is clipped to a fixed number of bits. Each sum may be referred to as a "section sum" or a "coefficient sum", i.e. a sum of coefficients. In the present embodiment each sum is clipped to an 8-bit binary code in step S1706, but in other embodiments each sum may be clipped to a length longer or shorter than 8 bits (i.e. a different clipped length may be used in step S1706). In some embodiments different sums may be clipped to different lengths. For example, the first sum may be clipped to one length (e.g. 10 bits) and the second and subsequent sums may be clipped to a different length (e.g. 8 bits). In this way, more clipping is used for sections that contain higher-frequency (and hence less perceptually important) coefficients.

Then, in step S1707 the hash value is obtained by concatenating the clipped sums. In this way, the total length of the hash is dependent on the number of sections that are used in step S1704, and on the length to which each section sum is clipped in step S1706. Although concatenation is used in step S1707 in the present embodiment, in other embodiments the hash value may be obtained in step S1707 by combining the clipped sums in any predefined manner.

In the present embodiment, the hash that is obtained in step S1707 is intended to be used as a reference hash, and therefore in step S1708 the resulting hash is embedded into the overscan area of the frame and transmitted to the receiver. It will be appreciated that the process of embedding the reference hash in step S1708 could involve embedding the reference hash using any suitable methods disclosed herein. In embodiments in which the reference hash is provided to the receiver via a different method other than embedding, for example by uploading the reference hash to an Internet server for subsequent retrieval by a display apparatus, step S1708 may be modified or omitted as appropriate.

Furthermore, in embodiments in which steps S1701 to S1707 are used to obtain a hash of a received frame at the receiver, for example at the display apparatus 130, step S1708 may be omitted and the process can instead continue to calculate the distance value using the obtained hash, as is the case in steps S1405 of Fig. 14 and S1608 of Fig. 16.

In the present embodiment, the distance value is calculated based on a weighted sum of the section sums for the obtained hash. Since the section sums are concatenated in step S1707, once the receiver (e.g. the display apparatus 130) has obtained the reference hash, the receiver can simply deconcatenate the reference hash to obtain the respective section sums for the reference hash, which may be referred to as "reference section sums". The distance, $D$, is then calculated based on the formula:

$$D = \sum_{i=0}^{N} \left| \frac{s_i^{H0} - s_i^{HR}}{w_i} \right|$$

where N is the number of DCT coefficient sections, $w_i$ is a weight for the $i$th section, and $s_i$ is the DCT section sum for the $i$th section.

Test carried out by the inventors have shown that the hashing algorithm and distance calculation described above with reference to Fig. 16 performs well in comparison to known hashing algorithms, both in terms of (1) rejecting expected image distortions, such as image compression noise, and (2) detecting UI graphic overlays. In contrast, known hashing algorithms and distance calculates typically perform well only in (1) or (2), but not in both.

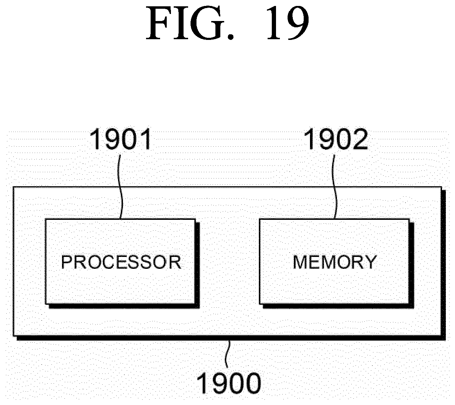

Depending on the embodiment, methods such as the ones described above with reference to the flowcharts in Figs. 3, 10, 12, 14, 16 and 17 may be implemented solely in software or solely in hardware, or in a combination of both hardware and software. In software implementations, the method may be performed by apparatus 1900 such as that illustrated in Fig. 19, comprising one or more processors 1901 and computer-readable memory 1902 arranged to store computer program instructions which, when executed by the one or more processors, cause the apparatus 1900 to perform the respective method.

Whilst certain embodiments of the invention have been described herein with reference to the drawings, it will be understood that many variations and modifications will be possible without departing from the scope of the invention as defined in the accompanying claims.

Aspects of the present invention are set out below in the following numbered clauses:

Clause 1: a method of embedding additional data into a video stream, the method comprising:

obtaining a plurality of bits of additional data to be embedded into a video stream; and

embedding the plurality of bits of additional data into the video stream by setting one or more pixel values of a plurality of pixels within an overscan area of the video stream, wherein the one or more pixel values relate to a brightness and/or colour property of a respective one of the plurality of pixels.

Clause 2: the method of clause 1, wherein prior to embedding the plurality of bits of additional data, said plurality of pixels within the overscan area all have the same initial pixel value.

Clause 3: the method of clause 2, wherein prior to embedding the plurality of bits of additional data, all pixels within the overscan area all have the same initial pixel value.

Clause 4: the method of clause 2 or 3, wherein embedding the plurality of bits of additional data comprises setting said one or more pixel values of the plurality of pixels according to an encoding scheme in which a first pixel value is indicative of a respective one of the plurality of bits having a first binary value, the first pixel value being different to the initial pixel value.

Clause 5: the method of clause 4, wherein in the encoding scheme a second pixel value is indicative of a respective one of the plurality of bits having a second binary value, the second pixel value being different to the initial pixel value.

Clause 6: the method of clause 2 or 3, wherein embedding the plurality of bits of additional data comprises setting the one or more pixel values of the plurality of pixels according to an encoding scheme in which a pixel value of one of the plurality of pixels is set to be one of a plurality of predefined values according to the binary values of a first subset of said bits of additional data, such that the first subset of bits is encoded using a single pixel value.

Clause 7: the method of clause 6, wherein each of the plurality of predefined pixel values differs from the initial pixel value by an amount equal to a fixed offset, $C_{offset}$, multiplied by an integer n.

Clause 8: the method of clause 7, wherein the integer n is equal to a power of 2.

Clause 9: the method of any one of the preceding clauses, wherein when setting the one or more pixel values of a plurality of pixels, a difference between a default pixel value used in the overscan area and a modified pixel value of each pixel is set according to a representative value derived from a current frame of the video stream.

Clause 10: the method of any one of the preceding clauses, wherein the overscan area comprises a first overscan region extending from a left-hand edge to a right-hand edge of a current frame of the video stream, the first overscan region comprising a part of the overscan area situated at a top edge or at a bottom edge of the current frame.

Clause 11: the method of clause 10 when dependent on clause 9, wherein the current frame includes a first content region containing image content of the video stream.

Clause 12: the method of clause 11, wherein the representative value of the current frame is indicative of a brightness and/or colour of pixels within the first content region.

Clause 13: the method of clause 12, wherein the first content region is immediately adjacent the first overscan region.

Clause 14: the method of clause 13, wherein the first content region has a height less than that of a total area in the current frame in which image content is displayed, such that the first content region only contains a part of the total image content within the current frame.

Clause 15: the method of any one of clauses 11 to 14, wherein the representative value is an average brightness and/or colour value of pixels within the first content region.

Clause 16: the method of any one of clauses 11 to 15, wherein embedding the plurality of bits of additional data into the video stream comprises modifying the one or more pixel values of a plurality of pixels within a first part of the first overscan region, the first part of the first overscan region being spaced apart from the first content region by a second part of the first overscan region in which pixel values are not modified.

Clause 17: the method of any one of clauses 11 to 16, wherein the current frame includes a plurality of first content regions each containing image content of the video stream, each of said plurality of first content regions comprising part of said image content at a different horizontal position in the current frame relative to other ones of said plurality of first content regions.

Clause 18: the method of any one of clauses 10 to 17, wherein the first overscan region is situated at the top edge of the current frame, and
wherein the overscan area comprises a second overscan region extending from the left-hand edge to the right-hand edge of a current frame of the video stream, the second overscan region comprising a part of the overscan area situated at the bottom edge of the current frame.

Clause 19: the method of any one of the preceding clauses, wherein the plurality of bits of additional data are embedded into one or more discrete blocks of pixels within a current frame of the video stream.

Clause 20: the method of clause 19, wherein the video stream comprises compressed video content, the compressed video content having been compressed according to a certain video compression format, and
wherein the size of each of the one or more discrete blocks of pixels is selected in dependence on said video compression format.

Clause 21: the method of any one of the preceding clauses, wherein a pixel value relating to a brightness of the plurality of pixels within the overscan area is set to a black point of the video.

Clause 22: the method of any one of the preceding clauses, comprising:

A. applying error correction coding to the plurality of bits of additional data prior to embedding the plurality of bits of additional data into the video stream.

Clause 23: the method of any one of the preceding clauses, comprising:

A. applying interleaving to the plurality of bits of additional data to change an order of the plurality of bits according to a predefined interleaving scheme, prior to embedding the plurality of bits of additional data into the video stream.

Clause 24: the method of any one of the preceding clauses, wherein the plurality of bits of additional data comprise an identifier, ID, for identifying a location from which further data may be obtained.

Clause 25: the method of clause 24, wherein the plurality of bits of additional data are embedded into the video stream at a first device, the method comprising:

transmitting the video stream comprising the plurality of bits of additional data from the first device to a second device;

receiving the video stream comprising the plurality of bits of additional data at the second device;

extracting the plurality of bits of additional data at the second device;

at the second device, retrieving further data from a location identified by the ID; and

performing an action at the second device in dependence on the retrieved further data.

Clause 26: the method of clause 25, wherein the further data comprises targeted advertising content, and performing the action at the second device comprises reproducing the targeted advertising content during an advertising break within the video stream.

Clause 27: the method of any one of the preceding clauses, wherein the one or more pixel values that are modified comprise one or more luma values and/or one or more chroma values.

Clause 28: a method of extracting a plurality of bits of additional data embedded in a video stream using the method of any one of the preceding claims, the method comprising:

counting a number of times that each one of a plurality of chroma values occurs within the overscan area, so as to obtain histogram data indicative of a frequency of occurrence of the plurality of chroma values;

identifying a subset of chroma values among the plurality of chroma values based on the obtained histogram data, such that the subset of chroma values comprises modified chroma values used to embed the additional data; and

extracting the additional data based on the identified subset of chroma values.

Clause 29: the method of clause 28, wherein identifying the subset of chroma values comprises:

identifying a maximum chroma value among the plurality of chroma values as one of the subset of chroma values;

applying a filter to the obtained histogram data centred on the identified maximum chroma value to obtain filtered histogram data, wherein applying the filter comprises setting a frequency of occurrence of the identified maximum chroma value to zero and reducing a frequency of occurrence of a predefined number of nearest neighbours of the identified maximum chroma value; and

repeatedly identifying a next maximum chroma value among the plurality of chroma values as another one of the subset of chroma values, and applying the filter again to the filtered histogram data, until a predetermined number of chroma values have been identified as the subset of chroma values.

Clause 30: a computer-readable storage medium storing computer program instructions which, when executed, perform a method according to any one of the preceding clauses.

Clause 31: apparatus for embedding additional data into a video stream, the apparatus comprising:
a data embedder configured to embed a plurality of bits of additional data into the video stream by modifying one or more pixel values of a plurality of pixels within an overscan area of the video stream, wherein the one or more pixel values relate to a brightness and/or colour property of a respective one of the plurality of pixels.

Clause 32: apparatus for embedding additional data into a video stream, the apparatus comprising:

one or more processors; and

computer-readable memory arranged to store computer program instructions which, when executed by the one or more processors, cause the apparatus to:

obtain a plurality of bits of additional data to be embedded into a video stream; and

embed the plurality of bits of additional data into the video stream by setting one or more pixel values of a plurality of pixels within an overscan area of the video stream, wherein the one or more pixel values relate to a brightness and/or colour property of a respective one of the plurality of pixels.

Clause 33: apparatus for extracting a plurality of bits of additional data embedded in a video stream using the method of any one of clauses 1 to 27, the apparatus comprising:

a histogram generator configured to obtain histogram data indicative of a frequency of occurrence of the plurality of chroma values, by counting a number of times that each one of a plurality of chroma values occurs within the overscan area;

a chroma value identifier configured to identify a subset of chroma values among the plurality of chroma values based on the obtained histogram data, such that the subset of chroma values comprises modified chroma values used to embed the additional data; and

a data extraction unit configured to extract the additional data based on the identified subset of chroma values.

Clause 34: apparatus for extracting a plurality of bits of additional data embedded in a video stream using the method of any one of clauses 1 to 27, the apparatus comprising:

one or more processors; and

computer-readable memory arranged to store computer program instructions which, when executed by the one or more processors, cause the apparatus to:

count a number of times that each one of a plurality of chroma values occurs within the overscan area, so as to obtain histogram data indicative of a frequency of occurrence of the plurality of chroma values;

identify a subset of chroma values among the plurality of chroma values based on the obtained histogram data, such that the subset of chroma values comprises modified chroma values used to embed the additional data; and

extract the additional data based on the identified subset of chroma values.

## Claims

1. A method for determining whether a frame of a video stream has been modified relative to an original version of the frame, the method comprising:

   receiving a video stream;
   obtaining a hash of a first frame in the video stream;
   obtaining a distance value indicative of a difference between the obtained hash and a reference hash associated with the first frame, based on a comparison between the obtained hash and the reference hash, wherein the reference hash comprises a hash value derived from an original version of the frame; and
   based on the obtained distance value exceeding a threshold, determining that the first frame has been modified relative to the original version of the first frame.

2. The method of claim 1, comprising:
   obtaining the reference hash from the received video stream.

3. The method of claim 2, wherein the received video stream comprises embedded additional data in the form of one or more modified pixel values in an overscan area, the one or more modified pixel values relate to a brightness and/or colour property of a respective one of a plurality of pixels in the overscan area,
   wherein obtaining the reference hash from the received video stream comprises extracting the additional data from the overscan area, and obtaining the reference hash from the extracted additional data.

4. The method of claim 3, wherein the additional data further comprises a Uniform Resource Locator, URL, in addition to the reference hash.

5. The method of claim 4, comprising:

   retrieving further data from a location identified by the URL; and
   performing an action in dependence on the retrieved further data.

6. The method of any one of the preceding claims, wherein the method is performed at a display apparatus configured to display targeted advertising content during an advertising break within the video stream.

7. The method of claim 6 when dependent on claim 5, wherein the further data comprises the targeted advertising content, and performing the action at the display apparatus comprises reproducing the targeted advertising content during the advertising break within the video stream.

8. The method of claim 6 or 7, comprising:
   in response to a determination that the first frame has been modified relative to an original version of the first frame, suppressing displaying of the targeted advertising content at the display apparatus until a subsequent determination that a subsequent frame of the video stream has not been modified relative to an original version of the subsequent frame.

9. The method of claim 8, comprising:

in response to a determination that the first frame has not been modified relative to an original version of the first frame, or in response to a determination that the subsequent frame of the video stream has not been modified relative to an original version of the subsequent frame, permitting the targeted advertising content to be displayed at the display apparatus.

10. The method of claim 9, wherein the targeted advertising is displayed over at least part of said first frame or said subsequent frame.

11. The method of any one of the preceding claims, wherein the video stream comprises interlaced video such that a given frame within the video stream comprises interlaced rows of portions of a first field and portions of a second field such that said frame can be deinterlaced to obtain a first picture and a second picture, the first picture comprising pixels included in said portions of the first field and the second picture comprising pixels included in said portions of the second field,

wherein obtaining the hash of the first frame comprises obtaining a hash of the first picture after deinterlacing said portions of the first field and said portions of the second field.

12. The method of claim 11, comprising:

obtaining two reference hashes comprising a first reference hash and a second reference hash associated with said frame, such that one of said two reference hashes comprises a hash value derived from the first field and the other one of said two reference hashes comprises a hash value derived from the second field, and the two reference hashes do not indicate which one of the first and second fields was used to derive the respective hash values,

wherein obtaining the distance value comprises:

comparing the obtained hash of the first picture to one of said two reference hashes to obtain a first distance value;
comparing the obtained hash of the first picture to the other one of said two reference hashes to obtain a distance difference value; and
selecting the smallest one of the first and second distance values as the distance value.

13. The method of any one of claims 1 to 10, comprising:

obtaining a plurality of reference hashes each associated with a respective one of a plurality of hashing regions within said first frame, such that one of said plurality of reference hashes comprises a hash value derived from one of the plurality of hashing regions and another one of said plurality of reference hashes comprises a hash value derived from another one of the plurality of hashing regions,
wherein obtaining the hash of the first frame comprises obtaining a plurality of hashes of the image content of the plurality of hashing regions, such that each obtained hash is derived from the image content of a different one of the plurality of hashing regions,
wherein obtaining the distance value comprises:

obtaining a plurality of distance values, each of said distance values being obtained by comparing a respective one of the plurality of reference hashes to a respective one of the hashes obtained for the plurality of hashing regions; and
selecting the largest one of the plurality of distance values as the distance value indicative of the difference between the obtained hash and the reference hash associated with the first frame.

14. The method of any one of the preceding claims, wherein obtaining the hash of the first frame comprises:

applying a frequency domain transformation to the first frame, to obtain a plurality of frequency coefficients;
for each one of a subset of said plurality of frequency coefficients, calculating a sum of the frequency coefficients within said subset, so as to obtain a plurality of coefficient sums;
clipping each coefficient sum to a respective fixed number of bits; and

obtaining the hash by combining the clipped coefficient sums in a predefined manner.

15. The method of claim 14, wherein obtaining the hash of the first frame further comprises at least one of:

downsampling the received frame to a predetermined size, prior to applying the frequency domain transformation;
cropping the received frame, prior to applying the frequency domain transformation; and
quantizing each of the plurality of frequency coefficients, prior to calculating the sum of the frequency coefficients within said subset.

# FIG. 1

140

130

SET TOP BOX
(STB)

110

120

# FIG. 2

# FIG. 3

OBTAIN BITS TO BE INSERTED INTO VIDEO STREAM — S301

APPLY ERROR CORRECTION CODING — S302

APPLY INTERLEAVING — S303

MODIFY ONE OR MORE PIXEL VALUES WITHIN OVERSCAN AREA — S304

APPLY VIDEO ENCODING — S305

# FIG. 4

420

410

430

# FIG. 5

521
522
410

# FIG. 6

# FIG. 7

# FIG. 8

# FIG. 9

# FIG. 10

| | |
|---|---|
| TRANSMIT VIDEO STREAM COMPRISING EMBEDDED DATA | S1001 |

↓

| | |
|---|---|
| RECEIVE VIDEO STREAM COMPRISING EMBEDDED DATA | S1002 |

↓

| | |
|---|---|
| EXTRACT EMBEDDED DATA COMPRISING IDENTIFIER, ID | S1003 |

↓

| | |
|---|---|
| RETRIEVE TARGETED ADVERTISING FROM SERVER, BASED ON ID | S1004 |

↓

| | |
|---|---|
| DISPLAY TARGETED ADVERTISING DURING ADVERTISING BREAK | S1005 |

# FIG. 11

921

DATA EXTRACTOR

| 1121 | 1122 | 1123 | 1124 |
|------|------|------|------|
| HISTOGRAM GENERATOR | CHROMA VALUE IDENTIFIER | FILTER | DATA EXTRACTION UNIT |

# FIG. 12

S1201 — GENERATE HISTOGRAM BY COUNTING OCCURRENCES OF EACH CHROMA VALUE WITHIN OVERSCAN AREA

S1202 — IDENTIFY CHROMA VALUE WITH HIGHEST RATE OF OCCURRENCE AS AN EMBEDDING CHROMA VALUE

S1204 — APPLY FILTER TO HISTOGRAM DATA CENTRED ON THE IDENTIFIED EMBEDDING CHROMA VALUE

S1203 — HAVE ALL EMBEDDING CHROMA VALUES BEEN IDENTIFIED?

NO

YES

S1205 — EXTRACT ADDITIONAL DATA BASED ON THE IDENTIFIED EMBEDDING CHROMA VALUES

# FIG. 13

# FIG. 14

```
RECEIVE FRAME THROUGH VIDEO
STREAM                                    ─S1401

            │
            ▼

OBTAIN REFERENCE HASH FOR
RECEIVED FRAME                            ─S1402

            │
            ▼

OBTAIN HASH FROM IMAGE CONTENT
OF RECEIVED FRAME BASED ON                ─S1403
PREDETERMINED HASHING ALGORITHM

            │
            ▼

OBTAIN DISTANCE VALUE BASED ON
OBTAINED HASH AND REFERENCE               ─S1404
HASH

            │
            ▼

         DISTANCE >        YES
         THRESHOLD?
S1407                      ─S1405               S1406

            NO

DISPLAY TARGETED ADVERTISING      SUPPRESS DISPLAY OF TARGETED
CONTENT                           ADVERTISING CONTENT
```

# FIG. 15

# FIG. 16

S1601 — RECEIVE INTERLACED VIDEO STREAM

S1602 — OBTAIN FIRST AND SECOND REFERENCE HASHES, $H_0$ AND $H_1$, ASSOCIATED WITH AN INTERLACED PICTURE IN THE RECEIVED VIDEO STREAM

S1603 — DEINTERLACE PICTURE TO OBTAIN FIRST AND SECOND FRAMES

S1604 — OBTAIN HASH FROM IMAGE CONTENT OF FIRST FRAME, $H_R$, BASED ON PREDETERMINED HASHING ALGORITHM

S1605 — OBTAIN FIRST DISTANCE VALUE, $D_0$, BASED ON $H_R$ AND $H_0$

S1606 — OBTAIN SECOND DISTANCE VALUE, $D_1$, BASED ON $H_R$ AND $H_1$

S1607 — $D_{min} = \min(D_0, D_1)$

S1608 — $D_{min} >$ THRESHOLD?

NO     YES

S1609 — DISPLAY TARGETED ADVERTISING CONTENT

S1610 — SUPPRESS DISPLAY OF TARGETED ADVERTISING CONTENT

# FIG. 17

| | |
|---|---|
| S1701 | DOWNSAMPLE FIELD TO PREDETERMINED SIZE |
| S1702 | APPLY FREQUENCY DOMAIN TRANSFORM TO DOWNSAMPLED FIELD |
| S1703 | QUANTIZE FREQUENCY COEFFICIENTS |
| S1704 | ARRANGE QUANTIZED COEFFICIENTS INTO PLURALITY OF SECTIONS, EXCLUDING ONE OR MORE OF THE HIGHEST FREQUENCY COEFFICIENTS |
| S1705 | CALCULATE SUM OF COEFFICIENTS WITHIN EACH SECTION |
| S1706 | CLIP EACH SUM TO FIXED NUMBER OF BITS |
| S1707 | FORM REFERENCE HASH BY CONCATENATING CLIPPED SUMS |
| S1708 | TRANSMIT REFERENCE HASH TO RECEIVER AS EMBEDDED ADDITIONAL DATA IN OVERSCAN AREA |

# FIG. 18

# FIG. 19

1901      1902

PROCESSOR      MEMORY

1900

# FIG. 20

S2001 — RECEIVE PROGRESSIVE VIDEO STREAM

S2002 — OBTAIN PLURALITY OF REFERENCE HASHES, $H_0$ TO $H_n$, ASSOCIATED WITH A FRAME IN THE RECEIVED VIDEO STREAM

S2003 — DIVIDE FRAME INTO PLURALITY OF HASHING REGIONS

S2004 — OBTAIN PLURALITY OF HASHES FROM IMAGE CONTENT OF THE PLURALITY OF HASHING REGIONS, $H_{R0}$ TO $H_{Rn}$, BASED ON PREDETERMINED HASHING ALGORITHM

S2005 — OBTAIN FIRST TO $n^{th}$ DISTANCE VALUES, $D_0$ TO $D_n$, BASED ON $H_{R0}$ TO $H_{Rn}$ AND $H_0$ TO $H_n$

S2006 — $D_{max} = max(D_0, \ldots D_n)$

S2007 — $D_{max} >$ THRESHOLD?

NO → S2008 — DISPLAY TARGETED ADVERTISING CONTENT

YES → S2009 — SUPPRESS DISPLAY OF TARGETED ADVERTISING CONTENT

Europäisches
Patentamt

European
Patent Office

Office européen
des brevets

# EUROPEAN SEARCH REPORT

Application Number

EP 23 20 6243

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2005/278733 A1 (NEOGI RAJA [US]) 15 December 2005 (2005-12-15) * abstract * * paragraph [0002] * * paragraph [0017] – paragraph [0020] * * paragraph [0029] – paragraph [0030] * * paragraph [0034] – paragraph [0038] * * paragraph [0043] * * figures 3,4,5,7,8 * ----- | 1-15 | INV. H04N21/435 H04N19/467 H04N21/44 H04N21/81 H04N21/431 H04N21/4363 H04N21/443 H04N21/454 |
| Y | MATT POOLE DVB PROJECT OFFICE: "TM5756r1_Targeted Advertising Signalling Specification_SoME (TM-GBS1029r20)", DVB, DIGITAL VIDEO BROADCASTING, C/O EBU – 17A ANCIENNE ROUTE – CH-1218 GRAND SACONNEX, GENEVA – SWITZERLAND , no. 1 15 January 2021 (2021-01-15), XP017859940, Retrieved from the Internet: URL:https://member.dvb.org/wg/CM/documentR evision/download/45273 TM5756r1_Targeted Advertising Signalling Specification_SoME (TM-GBS1029r20).doc [retrieved on 2021-01-15] * page 8, paragraph 3.1 – page 12, paragraph 4.1 * * page 13, paragraph 5.3.2 * * page 24, paragraph 8.1 – paragraph 8.2 * * page 28, paragraph 8.4.1 – page 29, paragraph A.2.1 * * page 31, paragraph B.2 – page 32 * * figures 1,3 * * table B.1 * ----- -/-- | 1-15 | TECHNICAL FIELDS SEARCHED (IPC) H04N G06V |

The present search report has been drawn up for all claims

| Place of search | Date of completion of the search | Examiner |
|---|---|---|
| The Hague | 9 April 2024 | Fantini, Federico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 20 6243

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2008/276089 A1 (TIAN JUN [US]) 6 November 2008 (2008-11-06) * abstract * * paragraph [0017] - paragraph [0022] * * paragraph [0040] - paragraph [0043] * * paragraph [0088] * * paragraph [0094] * * figures 4,5,6,7 * ----- | 1-15 | |
| A | US 2013/259228 A1 (REN YANSONG [US] ET AL) 3 October 2013 (2013-10-03) * abstract * * paragraph [0008] * * paragraph [0043] * * paragraph [0049] * * paragraph [0059] * * paragraph [0066] * * paragraph [0080] - paragraph [0082] * * figures 6,10,12 * ----- | 1-15 | |
| A | US 2020/314507 A1 (YEN BRUCE [US]) 1 October 2020 (2020-10-01) * abstract * * paragraph [0031] * * paragraph [0053] * * paragraph [0058] * * paragraph [0061] * * paragraph [0067] - paragraph [0068] * * paragraph [0096] - paragraph [0101] * * figure 11 * ----- -/-- | 1-15 | **TECHNICAL FIELDS SEARCHED (IPC)** |

The present search report has been drawn up for all claims

| Place of search | Date of completion of the search | Examiner |
|---|---|---|
| The Hague | 9 April 2024 | Fantini, Federico |

Europäisches
Patentamt
European
Patent Office
Office européen
des brevets

**EUROPEAN SEARCH REPORT**

Application Number

**EP 23 20 6243**

## DOCUMENTS CONSIDERED TO BE RELEVANT

| Category | Citation of document with indication, where appropriate, of relevant passages | Relevant to claim |
|---|---|---|
| A | US 2021/084369 A1 (NEUMEIER ZEEV [US] ET AL) 18 March 2021 (2021-03-18)<br>* abstract *<br>* paragraph [0002] – paragraph [0007] *<br>* paragraph [0024] – paragraph [0027] *<br>* paragraph [0032] *<br>* paragraph [0045] *<br>* paragraph [0050] – paragraph [0055] *<br>* paragraph [0062] – paragraph [0063] *<br>* paragraph [0068] – paragraph [0070] *<br>* paragraph [0082] *<br>* paragraph [0097] *<br>* figure 10 *<br>----- | 1-15 |

CLASSIFICATION OF THE APPLICATION (IPC)

TECHNICAL FIELDS SEARCHED (IPC)

The present search report has been drawn up for all claims

| Place of search | Date of completion of the search | Examiner |
|---|---|---|
| The Hague | 9 April 2024 | Fantini, Federico |

EPO FORM 1503 03.82 (P04C01)

**page 3 of 3**

## ANNEX TO THE EUROPEAN SEARCH REPORT
## ON EUROPEAN PATENT APPLICATION NO.

EP 23 20 6243

09-04-2024

| Patent document cited in search report | | | Publication date | Patent family member(s) | | | Publication date |
|---|---|---|---|---|---|---|---|
| US 2005278733 | A1 | | 15-12-2005 | NONE | | | |
| US 2008276089 | A1 | | 06-11-2008 | AU | 1461302 | A | 21-05-2002 |
| | | | | US | 2002146123 | A1 | 10-10-2002 |
| | | | | US | 2008276089 | A1 | 06-11-2008 |
| | | | | WO | 0239714 | A2 | 16-05-2002 |
| US 2013259228 | A1 | | 03-10-2013 | CN | 104205865 | A | 10-12-2014 |
| | | | | EP | 2832110 | A1 | 04-02-2015 |
| | | | | JP | 5937270 | B2 | 22-06-2016 |
| | | | | JP | 2015512589 | A | 27-04-2015 |
| | | | | KR | 20140130213 | A | 07-11-2014 |
| | | | | US | 2013259228 | A1 | 03-10-2013 |
| | | | | WO | 2013148304 | A1 | 03-10-2013 |
| US 2020314507 | A1 | | 01-10-2020 | US | 2020314507 | A1 | 01-10-2020 |
| | | | | US | 2021385556 | A1 | 09-12-2021 |
| | | | | US | 2023262298 | A1 | 17-08-2023 |
| US 2021084369 | A1 | | 18-03-2021 | US | 2014201769 | A1 | 17-07-2014 |
| | | | | US | 2014201772 | A1 | 17-07-2014 |
| | | | | US | 2014201773 | A1 | 17-07-2014 |
| | | | | US | 2014201774 | A1 | 17-07-2014 |
| | | | | US | 2014201787 | A1 | 17-07-2014 |
| | | | | US | 2021084369 | A1 | 18-03-2021 |
| | | | | US | 2022224976 | A1 | 14-07-2022 |

EPO FORM P0459

For more details about this annex : see Official Journal of the European Patent Office, No. 12/82